# EUROPÄISCHE PATENTANMELDUNG

(11) **EP 2 508 627 A1**
(43) Veröffentlichungstag der Anmeldung: **10.10.2012**
(21) Anmeldenummer: 11161062.2
(22) Anmeldetag: 04.04.2011
(51) Int. Cl.: C14C 3/20, C14C 3/08, C14C 3/28, C08G 18/28, C08G 18/34, C08G 18/70, C08G 18/77, C07C 381/14

(54) **Festes, partikuläres Material auf Basis Carbamoylsulfonatgruppen-haltiger Verbindungen**

(71) Anmelder: LANXESS Deutschland GmbH, 51369 Leverkusen (DE)
(72) Erfinder: Reiners, Jürgen, Dr., 51373 Leverkusen (DE); Tysoe, Christopher, 51375 Leverkusen (DE); Lütjens, Holger, Dr., 51069 Köln (DE); Grosch, Rafael, 51373 Leverkusen (DE); Heinzelmann, Franz, 51375 Leverkusen (DE)

(57) **Zusammenfassung**

Festes, partikuläres Material enthaltend
a) wenigstens eine Carbamoylsulfonatgruppen-haltige Verbindung und
b) wenigstens einen Emulgator.

## Beschreibung

Die Erfindung betrifft festes, partikuläres Material, enthaltend wenigstens eine Carbamoylsulfonatgruppen-haltige Verbindung und wenigstens einen Emulgator, ein Verfahren zur Herstellung sowie seine Verwendung als Vorgerbstoff, Gerbstoff oder Nachgerbstoff.

Isocyanate und ihre Verwendung als Gerbstoffe sind prinzipiell bekannt und beschrieben z.B. in US-A 2 923 594 "method of tanning", US-A 4 413 997 "dicarbamoylsulfonate tanning agent" oder H. Träubel, Gerbungen im Isocyanaten, 1. und 2. Teil, Das Leder, 1977, Seiten 150 ff und 181 ff.

Dabei hat sich gezeigt, dass nur Isocyanate mit relativ niedrigem Molekulargewicht in der Lage sind, die Kollagenmoleküle effektiv zu vernetzen und damit die Schrumpfungstemperatur des Leders zu erhöhen.

Diese Verbindungen können aber wegen ihrer toxikologischen Eigenschaften, dem hohen Dampfdruck und der geringen Wasserlöslichkeit nicht in üblichen Gerbapparaturen eingesetzt werden. Darüber hinaus reagieren Isocyanate in wässriger Lösung schnell über die Zwischenstufen Carbaminsäure und Amin zu einem polymeren Harnstoff, der keinerlei gerbende Wirkung aufweist. Daher ist eine temporäre Blockierung der Isocyanat-Funktion mit einer Schutzgruppe ratsam.

In EP-A 0 690 135 und EP-A 0 814 168 werden modifizierte Isocyanate beschrieben, mit denen diese Probleme eingeschränkt werden können. Hierzu werden ausgewählte Isocyanate zuerst mit einem Polyetheralkohol umgesetzt und anschließend mit Bisulfit zur Carbamoylverbindung umgewandelt, die gegenüber der Reaktion mit Wasser weitgehend inert ist. Man erhält eine wässrige Dispersion mit einer für den Einsatz im Gerbprozess ausreichenden Stabilität. Dieser Prozess hat jedoch zwei schwerwiegende Nachteile:
- Die Umsetzung von Isocyanat mit Polyetheralkohol muss unter Ausschluss von Wasser und bevorzugt ohne viskositätserniedrigende Lösungsmittel durchgeführt werden und erfordert daher technisch hochwertige und teure Hardware sowie einen zusätzlichen Syntheseschritt.
- Durch die Reaktion des Polyetheralkohols mit dem Isocyanat wird ein Teil der Isocyanat-Funktionen verbraucht und somit die Gerbwirkung des Produktes reduziert.

Aus EP-A-1647563 sind wässrige Zusammensetzungen bekannt, enthaltend wenigstens eine Carbamoylsulfonatgruppen enthaltende Verbindung und wenigstens ein Alkoholalkoxylat.

Unter den dort beschriebenen Alkoholalkoxylaten sind alkoxylierte langkettige oder verzweigte Alkohole zu verstehen. Insbesondere werden verzweigte Fettalkoholethoxylate als Emulgatoren bevorzugt. Die erhaltenen Lösungen neigen allerdings bei erhöhter Umgebungstemperatur, zum Beispiel bei 30-40°C, zur Phasentrennung, die bei Abkühlung nicht reversibel ist. Bei der Anwendung der Produkte nach entsprechender Lagerdauer ist daher eine Homogenisierung erforderlich, die in der Praxis zusätzlichen Aufwand und besondere Sorgfalt erfordert. Die Wirksamkeit als Gerbstoff wird daher unter ungünstigen Lagerbedingungen nachteilig beeinflusst.

Carbamoylsulfonatgruppenhaltige Verbindungen sind in Gegenwart von flüssigen Gerbstoff-Formulierungen hydrolyseempfindlich, was zu einem Wirksamkeitsverlust führen kann. Daher ist es sehr schwierig, lagerstabile Formulierungen aus Carbamoylsulfonatgruppenhaltigen Verbindungen zu erhalten, die eine ausreichende Lagerstabilität aufweisen.

Weiterhin spricht die Empfindlichkeit der Carbamoylsulfonatgruppenhaltigen Verbindungen in wässriger Lösung, die bei Erhöhung der Temperatur sogar natürlich zunimmt, dagegen, feste Formulierungen durch technische Verfahren wie einer Sprühtrocknung herzustellen, da hier zur Verdampfung des Wassers hohe Temperaturen erforderlich sind.. Es bestand daher weiterhin die Aufgabe, stabile und leicht zugängliche sowie leicht dosierbare Gerbstoff-Formulierungen bereitzustellen, die die genannten Nachteile nicht aufweisen. Außerdem müssen diese Formulierungen auch bei erhöhten Lagertemperaturen (z.B. 30°C bis 60°C) möglichst lange haltbar sein.
Überraschend wurde ein festes, partikuläres Material gefunden, enthaltend
a) wenigstens eine Carbamoylsulfonatgruppen-haltige Verbindung und
b) wenigstens einen Emulgator.

Bevorzugt besitzt das erfindungsgemäße Material einen Schmelzpunkt von größer 20°C, vorzugsweise von größer 60°C, insbesondere größer 100°C.

Unter "partikulär" wird insbesondere ein Material mit einer mittleren Teilchengröße von 0,1 µm bis 1000 µm, vorzugsweise 1 bis 800 µm, insbesondere 50 bis 300 µm, wobei der Mittelwert auf die Masse (Gewichtsmittel) aller Teilchen bezogen ist. Andere Mittelwerte (Volumenmittel) können über analytische Verfahren daraus berechnet werden und umgekehrt. Die mittlere Teilchengröße kann beispielsweise mikroskopisch ermittelt werden. Bevorzugt liegt das feste Material als Pulver oder Granulat vor.

Bevorzugt weist das erfindungsgemäße, partikuläre feste Material eine Restfeuchte von 0 bis 10 Gew.-%, insbesondere 0 bis 5 Gew.-%, besonders bevorzugt 0 bis 2 Gew.-%, bezogen auf das Material auf. Das erfindungsgemäße partikuläre feste Material basiert auf einer beliebigen, vorzugsweise einer kugelförmigen oder kugelformähnlichen oder davon abgeleiteten Partikelstruktur. Es kommen auch Agglomerate von Partikeln aus den genannten Formen im Bereich der angegebenen Partikelgröße in Frage. Erfindungsgemäß kann das Material als Pulver, Granulat oder als sog. Microgranulat vorliegen, wie es z. B. bei der Einstoffdüsen-Sprühtrocknung erhalten wird.

### Komponente a)

Unter Carbamoylsulfonatgruppen-haltigen Verbindungen werden solche mit folgender Struktureinheit verstanden:

-NH-CO-SO₃⁻K⁺

worin K⁺ ein Kationenequivalent ist.

Als Carbamoylsulfonatgruppen-haltige Verbindungen der Komponente a) kommen vorzugsweise Umsetzungsprodukte aus wenigstens einem organischen Polyisocyanat und wenigstens einem Bisulfit und/oder Disulfit in Frage.

Dabei kommen als organische Polyisocyanate insbesondere aliphatische, cycloaliphatische, araliphatische, aromatische oder heterocyclische Polyisocyanate in Betracht, wie sie z.B. von W. Siefken in Liebigs Annalen der Chemie 562, Seiten 75 bis 136 beschrieben werden.

Bevorzugt sind organische Polyisocyanate mit einer NCO-Funktionalität von 1,8 bis 4,2 mit einer Molmasse von vorzugsweise unter 800 g/mol, insbesondere organische Polyisocyanate mit einer NCO-Funktionalität von 1,8 bis 2,5 und einer Molmasse unter 400 g/mol.

Bevorzugte Polyisocyanate sind Verbindungen der Formel Q(NCO)ₙ mit einem mittleren Molekulargewicht unter 800, worin n eine Zahl von wenigstens 1,8, vorzugsweise von 1,8 bis 4,2, Q einen aliphatischen C₄-C₁₂-Kohlenwasserstoffrest, einen cycloaliphatischen C₆-C₁₅-Kohlenwasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, 2-Isocyanatomethyl-1,8-octamethylendiisocyanat, 1,3-diisocyanato-cyclobutan, 1-Isocyanato-2-isocyanatomethyl-cyclopentan, 1,3- und 1,4-diisocyanato-cyclohexan sowie beliebige Gemische dieser Isomeren, 1,2-, 1,3- und 1,4- Bis(isocyanatomethyl)-cyclohexan sowie beliebige Gemische dieser Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 2,4'- und 4,4'-Diisocyanato-dicyclohexyl-methan und Isomere, 1,3- und 1,4-Phenylen-diisocyanat, 2,4- und 2,6-Toluylendiisocyanat sowie beliebige Gemische dieser Isomeren, Diphenyhnethan-2,4'- und/oder -4,4'-diisocyanat, Naphthalin-1,5-diisocyanat, Uretdiongruppen enthaltende Polyisocyanate wie z.B. das Bis(6-isocyanatohexyl)-uretdion oder das die Uretdion-Struktur enthaltende Dimere des 1-Isocyanato-3,3,5-trimethyl-5-isocyanato-methylcyclohexans und beliebige Mischungen der vorgenannten Polyisocyanate; (ii) tri- und höherfunktionelle Polyisocyanate wie die Isomeren der Triisocyanatotriphenylmethanreihe (wie Triphenylmethan-4,4',4"-trisocyanat) und ihre Gemische; (iii) durch Allophanatisierung, Trimerisierung oder Biuretisierung aus den Polyisocyanaten (i) und/oder (ii) hergestellte Verbindungen, die mindestens 2,7 Isocyanatgruppen pro Molekül aufweisen. Beispiele für durch Trimerisierung hergestellte Polyisocyanate sind das durch Isocyanurat-Bildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4'-Diisocyanatotoluol, erhältlichen Isocyanuratgruppen enthaltenden Polyisocyanate. Beispiele für durch Biuretisierung hergestellte Polyisocyanate sind Tris-(isocyanatohexyl)biuret und dessen Gemische mit seinen höheren Homologen, wie sie z.B. gemäß DE-OS 23 08 015 zugänglich sind. Besonders bevorzugt sind Diisocyanate.

Besonders bevorzugte Polyisocyanate sind solche mit einem Molekulargewicht von weniger als 400 g/mol mit an Aliphaten oder Cycloaliphaten gebundenen NCO-Gruppen, wie z.B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere,1-Isocyanato-3,3,5-trimethyl-5-isocyanatomethyl-cyclohexan (IPDI), 1-Isocyanato-1-methyl-4-isocyanatomethyl-cyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate. Auch araliphatische Polyisocyanate wie die Xylylendiisocyanate der Formeln 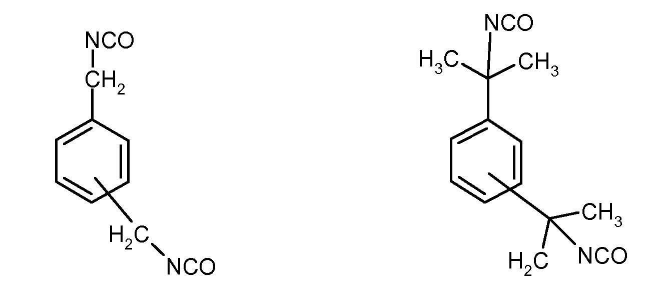 können verwendet werden.

Bevorzugt verwendet werden obige Diisocyanate. Man kann aber auch monofunktionelle aliphatische Isocyanate wie beispielsweise Butylisocyanat, Hexylisocyanat, Cyclohexylisocyanat, Stearylisocyanat oder Dodecylisocyanat und/oder Polyisocyanate mit einer durchschnittlichen NCO-Funktionalität von 2,2 bis 4,2 mitverwenden.

Bevorzugt handelt es sich bei den höherfunktionellen Polyisocyanaten um im wesentlichen aus trimerem 1,6-Diisocyanatohexan, trimerem 1,2-, 1,3- oder 1,4-Bis(isocyanatomethyl) cyclohexan, trimerem 1,2-, 1,3- oder 1,4- Bis(isocyanatoethyl)-cyclohexan, trimerem 1,2-, 1,3- oder 1,4-Bis(isocyanato-n-propyl)-cyclohexan, trimerem 1-Isocyanatopropyl-4-isocyanatomethyl-cyclohexan und Isomeren, oder trimerem 1-Isocyanato-3,3,5-trimethyl-5-isocyanatomethyl-cyclohexan und gegebenenfalls dimerem 1,6-Diisocyanatohexan, dimerem 1,2-, 1,3- oder 1,4-Bis(isocyanatomethyl) cyclohexan, dimerem 1,2-, 1,3- oder 1,4- Bis(isocyanatoethyl)-cyclohexan, dimerem 1,2-, 1,3- oder 1,4- Bis(isocyanato-n-propyl)-cyclohexan, dimerem 1 -Isocyanatopropyl-4-isocyanatomethylcyclohexan und Isomere, oder dimerem 1-Isocyanato-3,3,5-trimethyl-5-isocyanatomethyl-cyclohexan und den entsprechend höheren Homologen bestehenden Isocyanuratgruppen und gegebenenfalls Uretdiongruppen aufweisenden Polyisocyanatgemischen mit einem NCO-Gehalt von 19 bis 24 Gew.-%, wie sie durch an sich bekannte katalytische Trimerisierung und unter Isocyanurat-Bildung von 1,6-Diisocyanatohexan, 1,2-, 1,3- oder 1,4-Bis(isocyanatomethyl) cyclohexan, 1,2-, 1,3- oder 1,4-Bis(isocyanatoethyl)-cyclohexan, 1,2-, 1,3- oder 1,4- Bis(isocyanato-n-propyl)-cyclohexan, 1-Isocyanatopropyl-4-isocyanatomethyl-cyclo-hexan und Isomeren, oder von 1-Isocyanato-3,3,5-trimethyl-5-isocyanatomethylcyclohexan erhalten werden und die vorzugsweise eine (mittlere) NCO-Funktionalität von 3,2 bis 4,2 aufweisen.

Weitere geeignete Polyisocyanate sind durch Modifizierung aliphatischer oder cycloaliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-A 1 670 666, DE-A 3 700 209 und DE-A 3 900 053 und in den EP-A 336 205 und EP-A 339 396 beispielhaft beschrieben sind. Geeignete Polyisocyanate sind z.B. auch die estergruppenhaltigen Polyisocyanate, wie z.B. die durch Umsetzung von Pentaerythrit- oder Trimethylolpropan-silylethern mit Isocyanatocapronsäurechlorid zugänglichen Tetrakis- bzw. Triisocyanate (vgl. DE-A 3 743 782). Außerdem ist es auch möglich, Triisocyanate wie z.B. Tris-isocyanatodicyclohexylmethan zu verwenden.

Die Verwendung von monofunktionellen und von mehr als difunktionellen Isocyanaten wird in beiden Fällen vorzugsweise auf Mengen von je maximal 10 Mol-%, bezogen auf sämtliche Polyisocyanate, beschränkt.

Ganz besonders bevorzugt sind jedoch die oben genannten aliphatischen, cycloaliphatischen und araliphatischen Diisocyanate. Besonders bevorzugt sind Hexamethylendiisocyanat (HDI), Diisocyanato-cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 2,4'- und 4,4'-Diisocyanato-dicyclohexylmethan, 1-Isocyanatopropyl-4-isocyanatomethyl-cyclohexan und Isomere und 1-Isocyanato-3,3,5-trimethyl-5-Isocyanatomethylcyclohexan (IPDI). Aus dieser zuletzt genannten Gruppe sind speziell bevorzugt Hexamethylendiisocyanat (HDI), 1,2-, 1,3- und 1,4- Bis(isocyanatomethyl)-cyclohexan sowie Gemische dieser Isomeren.

Als Bisulfite und/oder Disulfite kommen vorzugsweise deren Alkali- oder Ammoniumsalze, insbesondere die Natriumsalze der schwefeligen bzw. dischwefeligen Säure, d.h. Natriumhydrogensulfit (NaHSO₃) bzw. Natriumdisulfit (Na₂S₂O₅) in Frage.

Vorteilhaft verwendet werden können auch die anderen Alkali- und Ammoniumsalze dieser Säuren, nämlich Kaliumbisulfit, Kaliumdisulfit, Lithiumbisulfit, Lithiumdisulfit, Ammoniumbisulfit, Ammoniumdisulfit sowie einfache Tetraalkylammoniumsalze dieser Säuren wie beispielsweise Tetramethylammonium-bisulfit, Tetraethylammonium-bisulfit usw. Zur Blockierung werden die Salze bevorzugt als wässrige Lösungen mit Festkörpergehalten von 5 bis 40 Gew.-% eingesetzt.

In einer bevorzugten Ausführungsform der Erfindung beruhen die Carbamoylgruppen-haltigen Verbindungen auf aliphatischen Polyisocyanaten wie Hexamethylendiisocyanat, Isophorondiisocyanat, Bis(isocyanato)cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethylcyclohexan und Isomere, 2,4' und 4,4'-Diisocyanato-dicyclohexylmethan oder Nonyltriisocyanat sowie Mischungen hieraus, insbesondere aber Hexamethylendiisocyanat 1,2-, 1,3- und 1,4-Bis(isocyanatomethyl)-cyclohexan sowie beliebige Gemische von Isomeren, 1,2-, 1,3- und 1,4-Bis(isocyanatoethyl)-cyclohexan sowie beliebige Gemische dieser Isomeren, 1,2-, 1,3- und 1,4-Bis(isocyanato-n-propyl)-cyclohexan sowie beliebige Gemische dieser Isomeren und/oder Isophorondiisocyanat, besonders bevorzugt Hexamethylendiisocyanat, Isophorondiisocyanat, 1,3-Bis(isocyanatomethyl)cyclohexan und 2,4'- und 4,4'-Diisocyanato-dicyclohexylmethan. Aus dieser zuletzt genannten Gruppe beruhen die Carbamoylgruppen-haltigen Verbindungen speziell bevorzugt auf Hexamethylendiisocyanat (HDI), 1,2-, 1,3- und 1,4- Bis(isocyanatomethyl)-cyclohexan sowie Gemische dieser Isomeren.

### Komponente b)

Als Emulgatoren kommen beispielsweise kationische, anionische, amphotere und nichtionische Tenside in Betracht, die vorzugsweise in der Lage sind, die Grenzflächenspannung zwischen einer organischen und einer wässrigen Phase zu vermindern, so dass sich eine Öl-in-Wasser-Emulsion bilden kann.

Bevorzugte kationische Emulgatoren sind quartäre Ammonium-Verbindungen zum Beispiel Cetyltrimethylammoniumbromid oder Benzyllauryldimethylammoniumchlorid.

Bevorzugte anionische Emulgatoren sind Seifen, Metallseifen, organische Seifen wie Mono-, Di- oder Triethanolaminoleat, -stearat, Diethylethanolaminoleat, -stearat oder 2-Amino-2-methylpropan-1-olstearat, sulfurierte Verbindungen wie Natriumdodecylsulfat oder Türkischrotöl und sulfonierte Verbindungen wie Natriumcetylsulfonat.

Bevorzugte amphotere Emulgatoren sind Phosphatide wie Lecithine, verschiedene Proteine wie Gelatine oder Casein und die eigentlichen Amphotenside.

Bevorzugte nichtionische Emulgatoren sind Fettalkohole wie Lauryl-, Cetyl-, Stearyl- oder Palmitylalkohol, partielle Fettsäureester mehrwertiger Alkohole mit gesättigten Fettsäuren wie Glycerolmonostearat, Pentaerythritolmonostearat, Ethylenglycolmonostearat, oder Propylenglycolmonostearat, partielle Fettsäureester mehrwertiger Alkohole mit ungesättigten Fettsäuren wie Glycerolmonooleat, Pentaerythritolmonooleat, ferner Polyoxyethylenester von Fettsäuren wie Polyoxyethylenstearat, Polymerisationsprodukte aus Ethylenoxid und Propylenoxid an Fettalkoholen wie Fettalkoholpolyglycolether oder Fettsäuren wie Fettsäureethoxylate.

Besonders bevorzugte nichtionische Emulgatoren sind wenigstens ein nichtionisches, Estergruppen-haltiges, alkoxyliertes Polyol mit einem HLB-Wert von wenigstens 13 (b1) und/oder ein Alkylglycosid (b2) und /oder ein nichtionischer Estergruppen-freier alkoxylierter Alkohol (b3).

### Komponente b1)

Die bevorzugten nicht-ionischen, Estergruppen-haltigen, alkoxylierten Polyole der Komponente b1) weisen einen HLB-Wert von 13 bis 19, insbesondere von 14 bis 18 auf, wobei der HLB-Wert bestimmt wird nach der Methode nach Griffin, W. C.: Classification of surface active agents by HLB, J. Soc. Cosmet. Chem. 1, 1949. Bevorzugte Verbindungen der Komponente (b1) weisen zudem eine Wasserlöslichkeit bei 20 °C von wenigstens 10 g pro Liter, insbesondere wenigstens 20 g pro Liter auf.

Als bevorzugte Verbindungen der Komponente b1) sind solche geeignet, die in an sich bekannter Weise aus Polyolen durch Alkoxylierung und partielle Veresterung der Hydroxylgruppen mit einer Carbonsäure erhältlich sind. Als geeignete Ausgangspolyole können beispielsweise mehrwertige (cyclo)aliphatische Alkohole wie Glycerin, Trimethylolpropan, Pentaerythrit, Dipentaerythrit, von Mono- oder Polysacchariden abgeleitete Polyole, vorzugsweise des Molekulargewichts von 92 bis 2000 als Startermoleküle eingesetzt werden. Besonders bevorzugte Starteralkohole sind Polyole mit 3 bis 10 Hydroxylgruppen, insbesondere Glycerin und solche mit Sorbitan-Grundgerüst, insbesondere von 1,4- oder 1,5-Sorbitan, bevorzugt von 1,4-Sorbitan.

Bevorzugte wässrige Zusammensetzung sind dadurch gekennzeichnet, dass es sich bei der Verbindung der Komponente b1) um das Reaktionsprodukt eines Polyols mit wenigstens einem Alkylenoxid mit 2 bis 6 Kohlenstoffatomen, vorzugsweise in einer Menge von 10 bis 60 Mol-Äquivalenten, bezogen auf das Polyol und anschließender Umsetzung mit wenigstens einer Carbonsäure mit 6 bis 30 C-Atomen handelt. Bei dem eingesetzten Polyol handelt es sich vorzugsweise um ein Polyol aus der Gruppe bestehend aus Glycerin, Trimethylolpropan, Pentaerythrit, Dipentaerythrit, und von Mono- und Polysacchariden abgeleitete Polyole, insbesondere Sorbit und Polyole mit Sorbitan-Grundgerüst.

Besonders bevorzugt handelt es sich bei den Verbindungen der Komponente b1) um partiell veresterte Sorbitan-Alkoxylate, deren Hydroxylgruppen vor oder vorzugsweise nach der Alkoxylierung mit Carbonsäuren mit einer Kettenlänge von 6 bis 30 Kohlenstoffatomen verestert sind, wobei jede Hydroxylgruppe des Grundpolyols eine voneinander unabhängige Anzahl von Alkoxy-Einheiten aufweisen kann und pro Sorbitan-Einheit im Mittel 10 bis 60 Alkoxy-Einheiten vorhanden sind. Die bevorzugten veresterten Sorbitan-Alkoxylate weisen eine statistische Verteilung der Alkoxygruppen auf.

Bevorzugt werden partiell veresterte alkoxylierte Sorbitan-Derivate durch Umsetzung von einem Sorbitan der Formel

X-(OH)ₘ

worin
- X: ein Sorbitanrest, insbesondere ein 1,4-Sorbitanrest ist und
m für die Zahl 4 steht
mit
10 bis 60 Äquivalenten, pro Mol Sorbitan, bevorzugt 10 bis 40, besonders bevorzugt 10 bis 30 und ganz besonders bevorzugt 15 bis 25 Äquivalenten gleicher oder verschiedener C₂-C₆-Alkylenoxide, insbesondere C₂- und/oder C₃-Alkylenoxide, vorzugsweise Ethylenoxid und mit
1 bis 3, vorzugsweise 0,8 bis 1,2 Äquivalenten, bezogen auf das Sorbitan, einer aliphatischen, ggf. ungesättigten Carbonsäure, vorzugsweise mit einer Kettenlänge von 6 bis 30 Kohlenstoffatomen, die unsubstituiert oder durch Hydroxygruppen substituiert ist, vorzugsweise geradkettig ist, in beliebiger Reihenfolge hergestellt. Bevorzugt erfolgt zuerst die Umsetzung mit dem Alkylenoxid und anschließend die Reaktion mit der Carbonsäure.

Bevorzugt sind Sorbitan polyoxyethylen monoester, welche mit 10-60 mol Ethylenoxid-Einheiten pro Sorbitan-Einheit alkoxyliert sind, und vorzugsweise ein 1,4-Sorbitan-Grundgerüst aufweisen.

Diese entsprechen vorzugsweise den folgenden Strukturformeln, in denen
- R: für einen ggf. durch Hydroxylgruppen substituierten Alkyl- oder Alkenylrest der Carbonsäure steht und
- m, n, p und q: unabhängig voneinander sind, statistische Werte sind und jeweils für eine Zahl von 0 bis 60 stehen,
mit der Maßgabe, dass die Summe der Anzahl der Oxyethylen-Einheiten m+n+p+q von 10 bis 60, vorzugsweise 18 bis 22, insbesondere 20 ist.

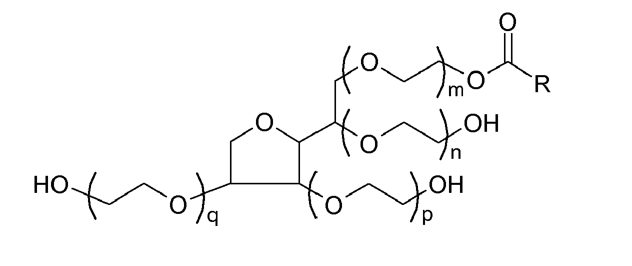

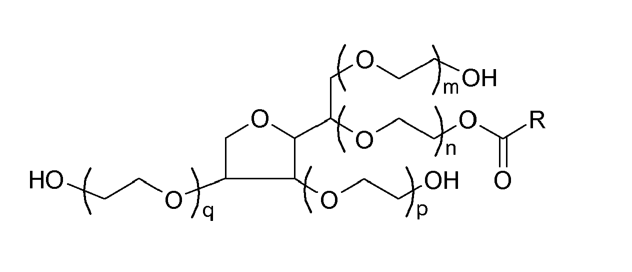

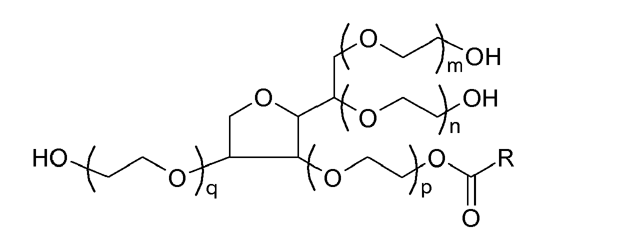

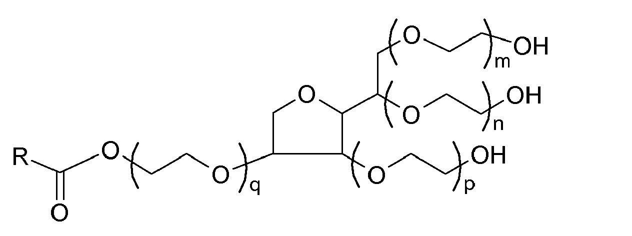

Ebenfalls sind auch entsprechende alkoxylierte Sorbitandiester sowie deren Gemische geeignet.

Weiterhin sind alkoxylierte Sorbitanester geeignet, bei denen eine Hydroxylgruppe der Sorbitan-Einheit, insbesondere in den oben angegebenen Formeln direkt mit der Carbonsäure verestert ist, d.h. bei der sich keine Alkylenoxid-Einheit zwischen der Sorbitan-Einheit und dem Carbonsäurerest befindet und die drei nicht acylierten Hydroxylgruppen mit einer entsprechend höheren Anzahl an Alkylenoxid-Einheiten verethert sind. Solche Verbindungen sind beispielsweise dadurch zugänglich, dass man das Sorbitan zunächst mit einer Carbonsäure verestert und das erhaltene Produkt, bestehend aus einer Mischung der isomeren Monoester, die bei einem Überschuss an Carbonsäure ausserdem Gemische der isomeren Diester enthalten kann, anschliessend alkoxyliert.

Das zur Alkoxylierung des Sorbitans eingesetzte Alkylenoxid ist bevorzugt ausgewählt aus der Gruppe bestehend aus Ethylenoxid, Propylenoxid und Butylenoxid. Dabei ist es auch möglich, dass das Sorbitan mit verschiedenen der genannten Alkylenoxide, z.B. Ethylenoxid und Propylenoxid, umgesetzt wird, wobei Sorbitan -Alkoxylate erhalten werden können, die jeweils Blöcke aus mehreren Einheiten eines Alkylenoxids, z.B. Ethylenoxid, neben Blöcken aus mehreren Einheiten eines anderen Alkylenoxids, z.B. Propylenoxid, aufweisen. Besonders bevorzugt enthalten die Sorbitan-Alkoxylate Ethylenoxid (EO)-Einheiten, vorzugsweise ausschließlich. In einem solchen Fall ist das eingesetzte Alkylenoxid besonders bevorzugt Ethylenoxid.

Des Weiteren ist es möglich, bei der Umsetzung eines Sorbitans mit verschiedenen der genannten Alkylenoxide, z.B. Ethylenoxid und Propylenoxid, Sorbitan-Alkoxylate zu erhalten, in denen der Einbau der verschiedenen Alkylenoxide statistisch erfolgt. Die Einsatzmengen an Alkylenoxid betragen vorzugsweise 10 bis 60 Mol Alkylenoxid pro Mol Sorbitan, bevorzugt 10 bis 40 Mol, besonders bevorzugt 10 bis 30 Mol und ganz besonders bevorzugt 15 bis 25 Mol. Ganz bevorzugtes Alkylenoxid ist Ethylenoxid.

Die zur Veresterung des Ausgangspolyols, besonders des Sorbitan-Alkoxylats geeigneten Carbonsäuren sind vorzugsweise gesättigt oder ungesättigt und linear oder verzweigt und können ggf. durch Hydroxylgruppen substituiert sein. Beispielsweise seien folgende Carbonsäuren genannt: Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Eicosansäure, Octadecensäure (Ölsäure), Undecensäure. Besonders bevorzugt sind Decansäure, Undecansäure, Dodecansäure (Laurinsäure), Tetradecansäure, Hexadecansäure (Palmitinsäure) und Octadecansäure (Stearinsäure)., Ricinolsäure. Ganz besonders bevorzugt sind Dodecansäure (Laurinsäure), Hexadecansäure (Palmitinsäure) und Octadecansäure (Stearinsäure) und Octadecensäure (Ölsäure).

Als Verbindungen der Komponente b1) können bspw. handelsübliche Produkte eingesetzt werden, wie bspw. Sorbitan-polyoxyethylen-(20)-monolaurat (beispielsweise Polysorbat® 20 oder Tween® 20 (Croda Oleochemicals) oder Eumulgin® SML 20 (Cognis)), Sorbitan polyoxyethylen (20) monopalmitat (beispielsweise Polysorbat 40 oder Tween® 40 (Croda Oleochemicals)), Sorbitan polyoxyethylen (20) monostearat (beispielsweise Polysorbat 60 oder Tween® 60 (Croda Oleochemicals) oder Eumulgin® SMS 20 (Cognis)), Sorbitan polyoxyethylen (20) monooleat (beispielsweise Polysorbat 80 oder Tween® 80 (Croda Oleochemicals)).

Weitere bevorzugte Verbindungen der Komponente b1) sind beispielsweise Alkoxylate von Mono-und Polyglycerinestern. Die Herstellung solcher alkoxylierten (Poly)glycerinester erfolgt entweder durch Alkoxylierung von Glycerin oder eines Polyglycerins und anschließende Veresterung mit einer Fettsäure oder durch Veresterung des Glycerins oder Polyglycerins mit einer Fettsäure und anschließende Alkoxylierung. Für die erfindungsgemäßen Zusammensetzungen sind insbesondere Alkoxylate von Mono- und Polyglycerinestern geeignet, die einen HLB-Wert von wenigstens 13 aufweisen und vorzugsweise eine Wasserlöslichkeit bei 20 °C von mehr als 10 g pro Liter besitzen. Geeignet sind weiterhin alkoxylierte Glycerinester oder Polyglycerinester, die mit mehr als einer Carbonsäure verestert sind. Besonders bevorzugt sind alkoxylierte Monoglycerin-Monoester.

Zur Alkoxylierung geeignet sind C₂ bis C₆-Alkylenoxide, besonders bevorzugt Ethylenoxid, Bevorzugt ist eine Alkoxylierung mit 10 bis 100 Alkylenoxideinheiten, insbesondere mit 20 bis 60 Alkylenoxid-Einheiten. Die Hydroxylgruppen des Glycerins oder des Polyglycerins weisen unabhängig voneinander im Mittel eine unterschiedliche Anzahl von Alkylenoxid-Einheiten auf.

Beispielsweise seien als besonders geeignete Alkoxylate von Mono- und Polyglycerinestern. genannt: Glycerinmonostearat-Ethoxylate mit im Mittel 15 bis 30, insbesondere mit im Mittel 20 EO-Einheiten, Glycerinmonooleat-Ethoxylate mit 20 bis 40 EO-Einheiten, Diglycerinmonostearat mit 20 bis 40 EO-Einheiten, Polyglycerin-monostearat mit 20 bis 40 EO-Einheiten, Ricinusöl-Alkoxylate und hydrierte Ricinusöl-Alkoxylate, kurz (hydrierte) Ricinusöl-Alkoxylate. Es handelt sich bei letzteren um Produkte, die durch Alkoxylierung von Ricinusöl oder hydriertem Ricinusöl mit Alkylenoxiden, insbesondere Ethylenoxid und Propylenoxid, erhältlich sind, bevorzugt sind solche, die 20 bis 100 Alkylenoxid-Einheiten pro (hydrierte) Ricinusöl-Einheit, bevorzugt 20 bis 60 Ethylenoxid-Einheiten pro (hydrierte) Ricinusöl-Einheit aufweisen.

Entsprechende Glycerin-basierte Verbindungen der Komponenten b1) sind ebenfalls als Handelsprodukte verfügbar, beispielsweise Glycerinmonostearat-Ethoxylat mit im Mittel 20 EO-Einheiten als Cutina® E 24 (Cognis), hydriertes Ricinusöl Ethoxylat mit im Mittel 40 EO-Einheiten als Eumulgin® HRE 40 (Cognis).

### Komponente b2)

Als bevorzugte Verbindungen der Komponente b2) sind beispielsweise Alkylmonoglykoside, Alkyldiglykoside, Alkyltriglykoside und höhere Homologe, hier allgemein als Alkylglykoside bezeichnet, insbesondere Monoglucoside, Diglucoside, Triglucoside, oder höhere Homologe und deren Gemische, zu nennen, deren Hydroxylgruppen partiell mit C₆-C₁₈-Alkylgruppen substituiert sind. Bevorzugt sind Mischungen aus Mono-, Di-, Triglucosiden und höheren Homologen mit C₆-C₁₈-Alkylgruppen, und einem Polymerisationsgrad (DP) von 1 bis 5. Besonders bevorzugt sind Alkylglucoside, deren Alkylgruppen eine Kettenlänge von 6 bis 18 C-Atomen, insbesondere 6 bis 12 C-Atomen, aufweisen. Weiterhin bevorzugt sind Alkylglucoside, deren Alkylgruppen eine Kettenlängenverteilung aufweisen oder Mischungen von Alkylglucosiden mit unterschiedlichen Alkylketten darstellen.

Alkylglykoside sind bevorzugt Substanzen, welche aus einem einzelnen Ring eines Zuckers oder einer Kette von Ringen eines Zuckers bestehen, welche mit glycosidischen Bindungen miteinander verknüpft sind, wobei der letzte Ring der glycosidischen Kette mit einem Alkohol acetalisiert ist. Alkylglycoside haben die folgende allgemeine Formel

H-(G)_{w}-O-R'

wobei
- G: für eine glycosidische Einheit steht,
- R': für den Alkylrest eines Alkohols steht, der zur Bildung des glycosidischen Acetals verwendet wird, und
- w: für den mittleren Polymerisationsgrad, d. h. die Anzahl an verknüpften glycosidischen Einheiten steht und für eine Zahl von 1 bis 5 steht.

Geeignet sind Alkylglycoside, bei welchen w für eine Zahl von 1 bis 5 steht und R für den Rest eines linearen oder verzweigten aliphatischen Alkohols mit 6 bis 30 C-Atomen steht. Diese Produkte sind an sich bekannt und handelsüblich. Der Wert w kann bei der Synthese dadurch beeinflusst werden, dass man das Molverhältnis von Alkohol zu Saccharid entsprechend einstellt. Durch ein Erhöhen dieses Verhältnisses werden Alkylglykoside mit einem niedrigeren Durchschnittswert von w erhalten. Umgekehrt wird ein höherer Polymerisationsgrad durch ein niedriges Molverhältnis Alkohol zu Saccharid erreicht.

Beispielsweise sei die Struktur eines Alkylglucosids aufgeführt, wobei R' für einen Alkylrest steht und v Werte von 1 bis 4 annimmt:

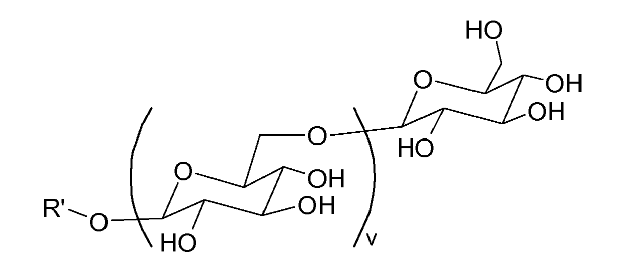

Die Verbindungen liegen in der Regel als Isomerengemische vor. Insbesondere die anomeren Kohlenstoffatome (glykosidische C-Atome) liegen als Gemische der Stereoisomeren vor.

Die bevorzugten Alkylpolyglucoside stellen je nach Molverhältnis der Einsatzstoffe und in Abhängigkeit von den Verfahrensbedingungen Gemische aus Alkylmonoglucosid, Alkyldiglucosid und Alkyltriglucosid und ggf. Alkyl-oligoglucosid dar, die ggf. noch (Poly)glucosen und geringe Anteile des freien Alkohols R'OH enthalten.

Die Herstellung von Alkylpolyglucosiden ist zum Beispiel durch eine direkte Synthese ausgehend von Zucker mit einem Überschuss an einem Alkohol oder mehreren Alkoholen möglich. Bei einem alternativen Syntheseverfahren geht man von Stärke aus, die zunächst mit niederen Alkoholen (z.B. Methanol, Ethanol, Butanol) in Gegenwart eines sauren Katalysators zu einem Alkylglucosid mit einer kurzkettigen glycosidischen Gruppe (z.B. Methyl, Ethyl, Butyl) umgesetzt wird. Dieses Zwischenprodukt wird anschließend unter Vakuum mit dem langkettigen Alkohol R'-OH in Gegenwart einer Säure als Katalysator durch Umacetalisierung umgesetzt, wobei das Gleichgewicht durch Abdestillieren des niederen Alkohols verschoben wird. Beispielsweise ist die Herstellung von Alkylglucosiden in WO90/001489, US 5576425, DE 69824366 oder in einer Publikation von M. Biermann (Henkel KGaA), K. Schmid, P. Schulz in Starch - Stärke, vol. 45(8), p. 281-288 (1993) beschrieben.

Als besonders bevorzugte Alkylglucoside kommen insbesondere Hexylglucosid, Octylglucosid, Decylglucosid, Undecylglucosid, und Dodecylglucosid sowie deren Homologe sowie die Mischung aus Alkyl-Mono-, Di-, Tri-, und ggf. Polyglucosid und Gemische aus dieser Reihe in Frage.

Weiterhin geeignet sind Alkylglykoside, deren Zuckerrest aus verschiedenen Zucker-Einheiten aufgebaut ist. Besonders bevorzugt sind aber Alkylglykoside, die ausschließlich aus Glucose-Einheiten aufgebaut sind.

Die Verbindungen der Komponente b2) sind als Handelsprodukte erhältlich: zum Beispiel ist ein C₈-C₁₀-Alkylpolyglucosid mit einem Polymerisationsgrad (DP = degree of polymerisation) von 1,6 unter dem Handelsnamen Glucopon® 215 CS UP (Cognis) erhältlich. Ein C₁₂-C₁₆-Alkylpolyglucosid mit einem Polymerisationsgrad DP von 1,4 ist zum Beispiel unter dem Handelsnamen Glucopon® 600 CS UP (Cognis) erhältlich.

### Komponente b3)

Als bevorzugte nichtionische, Estergruppen-freie Alkoholalkoxylate der Komponente b3) sind Polyetheralkohole geeignet, die in an sich bekannter Weise durch Alkoxylierung geeigneter Startermoleküle zugänglich sind. Solche sind beispielsweise aus EP-A-1647563 bekannt. Zur Herstellung der Polyetheralkohole können beliebige ein- oder mehrwertige Alkohole des Molekulargewichts 88 bis 438 als Startermoleküle eingesetzt werden.

Besonders bevorzugt handelt es sich dabei um Alkoxylate aliphatischer Alkohole mit einer Kettenlänge von 5 bis 30 Kohlenstoffatomen und 1-25 Alkoxy-Einheiten.

Bevorzugt werden lineare oder verzweigte, gesättigte oder ungesättigte Alkoholalkoxylate eingesetzt, die durch Umsetzung mindestens eines Alkohols ROH mit n Mol mindestens eines Alkylenoxids pro Mol Alkohol ROH erhalten werden,
worin
R ein Alkylrest mit 5 bis 30 Kohlenstoffatomen ist, der eine Hauptkette mit 4 bis 29 Kohlenstoffatomen aufweist, die in der Kettenmitte mit mindestens einem C₁-C₁₀-Alkylrest verzweigt ist;
das Alkylenoxid 2 bis 6 Kohlenstoffatome aufweist
und
der n ein Wert von 1 bis 25 ist.

Unter Kettenmitte sind im Sinn der vorliegenden Erfindung diejenigen Kohlenstoffatome der Hauptkette, d.h. der längsten Alkylkette des Rests R, zu verstehen, beginnend mit dem Kohlenstoffatom C#2, wobei die Nummerierung von dem Kohlenstoffatom (C#1) ausgeht, das direkt an das dem Rest R benachbarte Sauerstoffatom gebunden ist, und endend mit dem Kohlenstoffatom ω das endständige Kohlenstoffatom der Hauptkette ist, wobei C#2 und das Kohlenstoffatom ω-2 eingeschlossen sind. Das bedeutet, dass mindestens eines der Kohlenstoffatome C#2, C#3, ... bis C_{ω-2} der Hauptkette des Rests R mit einem C₁- bis C₁₀-Alkylrest substituiert ist. Bevorzugt ist das Kohlenstoffatom C#2 der Hauptkette des Rest R mit einem C₁- bis C₁₀-Alkylrest substituiert. Daneben ist es auch möglich, dass ein oder mehrere Kohlenstoffatome in der Kettenmitte mit zwei C₁- bis C₁₀-Alkylresten substituiert sind, d.h., dass ein oder mehrere Kohlenstoffatome in der Kettenmitte quartäre Kohlenstoffatome sind.

Besonders bevorzugt ist ein Gemisch aus Alkoholalkoxylaten, basierend auf 1 bis 3 verschiedenen Alkoholen ROH, besonders bevorzugt auf 1 oder 2 verschiedenen Alkoholen ROH. Dabei kann die Anzahl der Kohlenstoffatome des Rests R unterschiedlich sein und/oder die Art der Verzweigung. Bevorzugt weist die Hauptkette der Alkohole ROH 1 bis 4 Verzweigungen auf, soweit die Kettenlänge mehr als eine Verzweigung in der Kettenmitte ermöglicht, besonders bevorzugt 1 bis 3, ganz besonders bevorzugt 2 oder 3. Diese Verzweigungen weisen im Allgemeinen unabhängig voneinander 1 bis 10 Kohlenstoffatome, bevorzugt 1 bis 6, besonders bevorzugt 1 bis 3 Besonders bevorzugte Verzweigungen sind demnach Methyl-, Ethyl-, n-Propyl- oder iso-Propyl-Gruppen.

Der Rest R des Alkohols ROH weist vorzugsweise 5 bis 30 Kohlenstoffatome auf. Da der Rest R vorzugsweise wenigstens eine Verzweigung mit mindestens einem Kohlenstoffatom aufweist, umfasst die Hauptkette 4 bis 29 Kohlenstoffatome. Bevorzugt weist der Rest R 6 bis 25 Kohlenstoffatome auf, besonders bevorzugt 10 bis 20. Das heißt, die Hauptkette weist bevorzugt 5 bis 24 Kohlenstoffatome auf, besonders bevorzugt 9 bis 19. Ganz besonders bevorzugt weist die Hauptkette 9 bis 15 Kohlenstoffatome auf und die übrigen Kohlenstoffatome des Rest R verteilen sich auf eine oder mehrere Verzweigungen.

Als bevorzugte lineare Alkohole ROH kommen beispielsweise Octylalkohol, Nonylalkohol, Decylalkohol, Undecylalkohol, Dodecylalkohol, Tridecylalkohol, Tetradecylalkohol, Pentadecylalkohol, Hexadecylalkohol, Octadecylalkohol, Octadecenylalkohol oder Hexadecenylalkohol sowie ihre technischen Gemische in Frage.

Das mit den verzweigten Alkoholen ROH zu den eingesetzten Alkoholalkoxylaten umgesetzte Alkylenoxid ist bevorzugt ausgewählt aus der Gruppe bestehend aus Ethylenoxid, Propylenoxid und Butylenoxid. Dabei ist es auch möglich, dass ein einziger Alkohol ROH mit verschiedenen der genannten Alkylenoxide, z.B. Ethylenoxid und Propylenoxid, umgesetzt wird, wobei Alkoholalkoxylate erhalten werden können, die jeweils Blöcke aus mehreren Einheiten eines Alkylenoxids, z.B. Ethylenoxid, neben Blöcken aus mehreren Einheiten eines weiteren Alkylenoxids, z.B. Propylenoxid, aufweisen. Besonders bevorzugt enthalten die erfindungsgemäß eingesetzten Alkoholalkoxylate Ethylenoxid (EO)-Einheiten, das heißt, das eingesetzte Alkylenoxid ist bevorzugt Ethylenoxid.

Des Weiteren ist es möglich, bei der Umsetzung eines einzigen Alkohols ROH mit verschiedenen der genannten Alkylenoxide, z.B. Ethylenoxid und Propylenoxid, Alkoholalkoxylate zu erhalten, in denen der Einbau der verschiedenen Alkylenoxide statistisch erfolgt. Die Einsatzmengen an Alkylenoxid betragen vorzugsweise 1 bis 25 Mol Alkylenoxid pro Mol Alkohol, bevorzugt 1 bis 20 Mol, besonders bevorzugt 3 bis 15 Mol und ganz besonders bevorzugt 5 bis 12 Mol.

### Weitere Zusatzstoffe

Das erfindungsgemäße Material kann zudem weitere Zusatzstoffe, vorzugsweise Carbonsäuren der Komponente c) oder deren Salze, enthalten oder auch nicht enthalten.

### Komponente c)

Geeignete Verbindungen der Komponente c) sind insbesondere Mono- oder Polycarbonsäuren, vorzugsweise Hydroxypolycarbonsäuren. Beispielsweise seien genannt: Ameisensäure, Essigsäure, Oxalsäure, Glyoxylsäure, Malonsäure, Milchsäure, Weinsäure, Maleinsäure, Glutarsäure, Phthalsäure, Adipinsäure, Äpfelsäure, Bernsteinsäure, Citronensäure, oder Polycarbonsäuren wie (Co)-Polymerisate von (Meth)acrylsäure, Maleinsäure, Crotonsäure oder Itaconsäure oder deren Derivaten mit ggf. weiteren Monomeren wie Ethen, Propen, Styrol, Hydroxyethylmethacrylat, Hydroxypropylmethacrylat, Hydroxyethylacrylat, Hydroxy-propylacrylat, 4-Hydroxybutylvinylether, insbesondere solche, die eine mittlere Molmasse (Gewichtsmittel MW) von 500 bis 100000 g/mol, insbesondere 500 bis 30000 g/mol aufweisen.

Besonders bevorzugt sind als Komponente c) weinigsten eine Carbonsäure, vorzugsweise Oxalsäure, Bernsteinsäure, Glutarsäure, oder Adipinsäure, insbesondere weinigsten eine Hydroxy-Polycarbonsäure, vorzugsweise Citronensäure, Weinsäure oder Milchsäure oder Gemische daraus.

### Komponente d)

Als bevorzugte weitere Zusatzstoffe (Komponente d) können vorzugsweise organische Gerbstoffe, wie Syntane, Harzgerbstoffe, polymere Nachgerbstoffe sowie vegetabile Gerbstoffe und/oder Hilfsstoffe wie Fettungsmittel, Entstaubungsmittel, Puffer und/oder Füllstoffe enthalten sein oder nicht enthalten sein.

Bei den Syntanen handelt es sich beispielsweise um wenigstens ein Kondensationsprodukt auf Basis von
A) sulfonierten Aromaten,
B) Aldehyden und/oder Ketonen und gegebenenfalls
C) einer oder mehreren Verbindungen, ausgewaehlt aus der Gruppe der nicht sulfonierten Aromaten, Harnstoff und Harnstoffderivaten.

Auf "Basis von" bedeutet, dass das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten werden im Rahmen dieser Anmeldung auch sulfomethylierte Aromaten verstanden. Bevorzugte sulfonierte Aromaten sind: Naphthalinsulfonsaeuren, Phenolsulfonsaeure, sulfonierte Ditolylether, 4,4'-Dihydroxydiphenylsulfon, sulfoniertes Diphenylmethan, sulfoniertes Diphenyl, sulfoniertes Terphenyl oder Benzolsulfonsaeuren.

Als Aldehyde und/oder Ketone kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten kommen beispielsweise Phenol, Kresol oder Dihydroxydiphenylmethan in Frage.

Als Harnstoffderivate können beispielsweise Dimethylolharnstoff, Melamin oder Guanidin genannt werden.

Phenol und Phenolderivate wie beispielsweise Phenolsulfonsaeure, werden vielfach auch durch gleichzeitiges Einwirken von Formaldehyd und Harnstoff oder durch Dimethylolharnstoff verknüpft (DE-A 1 113 457). Sulfonierungsprodukte aromatischer Verbindungen werden (laut Ullmanns Encyklopaedie der technischen Chemie Band 16 (4. Auflage) Weinheim 1979, S. 138) in der Regel, ohne die nicht-umgesetzten Ausgangsverbindungen abzutrennen, allein oder gemeinsam mit weiteren Ausgangsverbindungen mit Formaldehyd kondensiert. Eine löslich machende Gruppe kann bei Phenolen auch durch Sulfomethylieren unter gleichzeitiger Einwirkung von Alkalihydrogensulfit und Formaldehyd zusammen mit der Kondensation eingeführt werden. Diese Sulfomethylierung ist z.B. in DE-A 848 823 beschrieben.

Weitere bevorzugte Kondensationsprodukte sind Kondensate von Ditolylethersulfosäure mit 4,4'-Dihydroxydiphenylsulfon, Phenolsulfonsäure mit Phenol, Formaldehyd und Harnstoff.

Besonders bevorzugte Kondensationsprodukte sind solche, die durch Kondensation von sulfonierten und gegebenenfalls nicht sulfonierten Aromaten mit aliphatischen Aldehyden, vorzugsweise Formaldehyd erhalten werden, wobei unter sulfonierten Aromaten insbesondere keine sulfomethylierten Aromaten verstanden werden.

Solche Kondensationsprodukte werden vorzugsweise durch Kondensation von sulfoniertem Naphthalin und sulfoniertem Phenol oder 4, 4'-Dihydroxydiphenylsulfon mit Formaldehyd oder durch Kondensation von Naphthalinsulfonsäeure und Formaldehyd oder durch Kondensation von sulfoniertem Ditolyläther, sulfoniertem Phenol mit Formaldehyd oder durch Kondensation von sulfoniertem Phenol, Harnstoff, Phenol mit Formaldehyd oder durch Kondensation von sulfoniertem Phenol, Harnstoff, Phenol, sulfoniertem Ditolylether mit Formaldehyd erhalten.

Das bei der Kondensation bevorzugt erhaltene Kondensationsprodukt besitzt vorzugsweise einen mittleren Kondensationsgrad von 1 bis 150, vorzugsweise von 1 bis 20, insbesondere von 1 bis 5.

Bevorzugt sind hier Produkte basierend auf die Kondensation von Naphthalinsulfonsäuren, Ditolylethersulfonsäuren, Phenolsulfonsäuren, Dihydroxy-diphenylsulfon und Phenol sowie Kombinationen aus diesen Rohstoffen mit Formaldehyd oder Glutardialdehyd und gegebenenfalls Harnstoff oder Harnstoffderivaten.

Ebenfalls geeignete synthetische Gerbstoffe sind Polykondensate auf Basis von Dihydroxydiphenylsulfon / Naphthalinsulfonsäure und Formaldehyd, Dihydroxy-diphenylsulfon /Ditolylethersulfonsäure und Formaldehyd, Dihydroxydiphenylsulfon / Phenolsulfonsäure /Ditolylethersulfonsäure / Harnstoff und Formaldehyd (handelsübliche Gerbstoffe wie beispielsweise TANIGAN® BN, TANIGAN® PR, TANIGAN® 3LN, TANIGAN® HO, TANIGAN® UW der Fa. Lanxess oder Mischungen daraus).

Die verwendeten organische Gerbstoffe, insbesondere die Syntane können noch weitere Zusätze wie Puffer oder Ligninsulfonate enthalten.

Auch Harzgerbstoffe kommen als organische Gerbstoffe in Betracht und sind vorzugsweise Polykondensate auf Basis von Melamin, Dicyandiamid, Harnstoff, Ligninsulfonat oder Mischungen daraus mit Formaldehyd oder Glutardialdehyd.

Bei den bevorzugten polymeren Nachgerbstoffen handelt es sich um hochmolekulare wasserlösliche oder in Wasser dispergierbare Produkte z. B. aus der (Co-) Polymerisationsreaktion ungesättigter Säuren und deren Derivate mit z. B. füllender oder fettender Wirkung auf Leder. Bevorzugt sind (Co)polymerisationsprodukte der Acryl- und Methacrylsäure sowie deren Ester.

Weitere polymere Nachgerbstoffe sind die in WO 97/06279 beschriebenen Polyasparaginsäureamide, mit einem als Zahlenmittel bestimmten Molekulargewicht von 700 bis 30 000, vorzugsweise 1 300 bis 16 000, erhältlich durch Umsetzung von
A. Polysuccinimid mit einem als Zahlenmittel bestimmten Molekulargewicht von 500 bis 10 000, vorzugsweise 500 bis 6 000, insbesondere 1 000 bis 4 000, mit
B. 5 bis 90, vorzugsweise 20 bis 80 Mol-%, bezogen auf Succinimideinheiten des Polysuccinimids A, primärem und/oder sekundärem Amin, dessen Stickstoffsubstituenten 1 bis 60, vorzugsweise 1 bis 36 Kohlenstoffatome enthalten, durch Fluoratome, Hydroxyl-, Aminogruppen und/oder Siliciumorganische Reste substituiert und/oder durch Sauerstoffatome, Ester-, Amid-, Harnstoff-, Urethangruppen unterbrochen sein können, wobei mindestens 2,5, vorzugsweise mindestens 15, insbesondere mindestens 30 Mol-% der Stickstoffsubstituenten des Amins mindestens 12 Kohlenstoffatome enthalten, gegebenenfalls
C. (i) Derivaten von C₁-C₁₈-Monocarbonsäuren und/oder C₂-C₁₀-Dicarbonsäuren und/oder (ii) Monoisocyanaten, Diisocyanaten oder Epichlorhydrin (zur Umsetzung von Amino-und/oder Hydroxylgruppen an den Stickstoffsubstituenten des Umsetzungsprodukts aus A und B), und (obligatorisch)
D. 95 bis 10, vorzugsweise 80 bis 20 Mol-% ringöffnende Base in Gegenwart von Wasser.

Auch die bevorzugten Polyasparaginsäureamide der WO 97/06279 sollen hiermit als inkorporiert gelten.

Weitere polymere Nachgerbstoffe sind beispielsweise (Co)Polymere, die
a) Struktureinheiten der allgemeinen Formel I 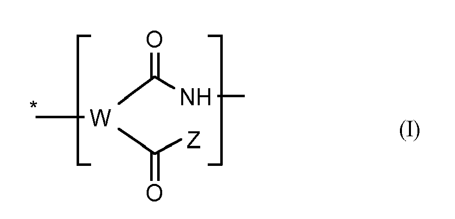 enthalten, wobei
   - W: für einen dreiwertigen Rest aus der Gruppe 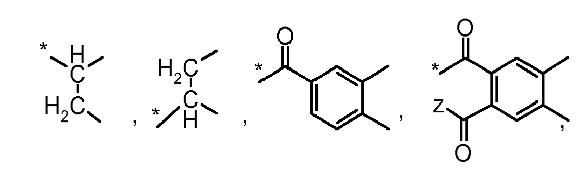 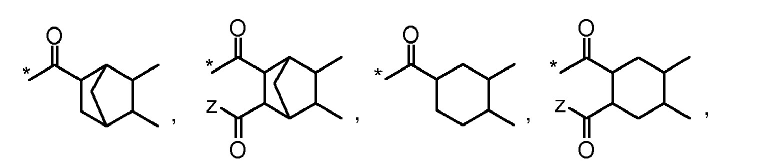 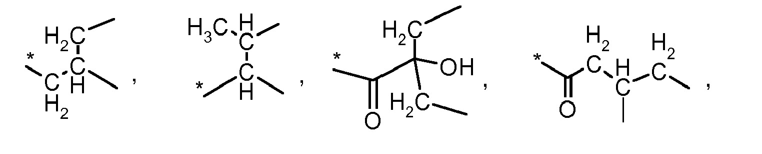 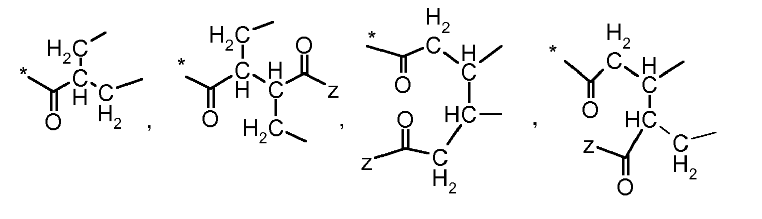 steht, in der
   - *: die Orientierung für den Einbau des Restes W in die Formel I angibt, und
   - Z: für die Reste ―OH, -O ⁻ M ⁺ oder -N-R¹R² steht, wobei R¹ und R² unabhängig voneinander für Wasserstoff, gegebenenfalls substituierte Alkylreste, Alkenylreste, Aralkyl-Reste oder Cycloalkyl-Reste stehen, die durch O-Atome, N-Atome, Si-Atome oder Amid-, Carbonat-, Urethan-, Harnstoff-, Allophanat-, Biuret-, Isocyanurat-Gruppen oder Mischungen daraus unterbrochen sein können und
   - M⁺: für H⁺ oder ein Alkaliion, ein NH₄-Ion oder einen primären, sekundären, tertiären oder quartären aliphatischen Ammoniumrest, der vorzugsweise eine C₁-C₂₂-Alkyl- oder -Hydroxyalkylgruppe trägt, steht,
b) wenigstens 10 Mol-%, bezogen auf die Einheiten der Formel I, Struktureinheiten der allgemeinen Formel Ia 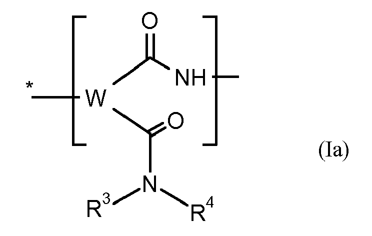 enthält, wobei
   - R³: für einen Kohlenwasserstoffrest mit C₁-C₆₀-Atomen, vorzugsweise einen gesättigten C₁-C₆₀-Alkylrest, insbesondere C₈-C₃₀-Alkylrest steht und
   - R⁴: für Wasserstoff steht oder die gleiche Bedeutung hat wie R³, und
c) Polyether-Einheiten mit einem mittleren Molekulargewicht von 200-6000 g/mol enthalten.

Vegetabile Gerbstoffe sind beispielsweise aus pflanzlichen Quellen gewonnene Gerbstoffe aus den Klassen der kondensierten Gerbstoffe bzw. hydrolysierbaren Gerbstoffe z. B. Kastanienextrakt, Mimosa, Tara oder Quebracho. Als vegetabile Gerbstoffe kommen auch solche in Betracht, die aus pflanzlichen Quellen wie Algen, Früchten, z.B. Rhabarber, Oliven, Pflanzenteilen wie Blättern, Baumrinden, Wurzeln, Hölzern ggf. nach einer chemischen bzw. enzymatischen Modifizierung und/oder durch extraktive Methoden erhalten werden können.

Fettungsmittel sind vorzugsweise Substanzen basierend auf biologischen, mineralen oder synthethischen Ölen, die zur Verbesserung der Einsetzbarkeit in Wasser mit hydrophilen Gruppen versehen werden können z. B. durch vollständige oder partielle Sulfatierung, Sulfitierung, Carboxylierung oder Phosphatierung.

Als Füllstoffe kommen bevorzugt inerte anorganische Salze sowie organische Polymere in Frage, z. B. Sulfate wie Natriumsulfat oder Calciumsulfat, Talkum, Siliciumoxid-Verbindungen, Stärke oder Ligninsulfonate in Betracht.

Als geeignete Puffer sind solche zu verstehen, die durch Zugabe in einer ausreichenden Menge einen pH-Bereich, insbesondere einen pH-Bereich von 1 bis 5, bevorzugt 2,0 bis 3,5 einzustellen und zu stabilisieren vermögen. Als geeignete Puffer hierfür kommen bevorzugt Mischungen aus Verbindungen der Komponente c) und deren Salzen in Frage. Als bevorzugte Salze kommen insbesondere Alkalisalze, vorzugsweise Natrium- oder Kaliumsalze in Frage.

Als bevorzugte Entstaubungsmittel sind beispielsweise Alkoxylate von aromatischen Verbindungen oder Polyether oder bestimmte Diester zu nennen. Beispielsweise seien konkret genannt: Ethoxylate, Propoxylate oder Mischpolyether auf Basis von EO/PO, wobei als aromatische Verbindungen Hydrochinon oder Phenol-Styrol erwähnt seien, Polyethylenglykol mit einer mittleren Molmasse von 100 bis 800, Polypropylengykol mit einer mittleren Molmasse von 100 bis 800, EO/PO-Mischpolyether mit einer mittleren Molmasse von 100 bis 800, Monoalkylether oder Dialkylether der oben genannten Polyether, wobei der Alkylrest 1 bis 4 C-Atome aufweisen kann. Geeignet sind auch Entstaubungsmittel auf Mineralöl-Basis. Entstaubungsmittel werden vorzugsweise in einer Menge von 0 bis 5,0, bevorzugt 0,1 bis 2,0%, bezogen auf erfindungsgemäßes festes Material, eingesetzt.

### Mengen

Das erfindungsgemäße Material kann weitere Zusatzstoffe der Komponenten c) und/oder d) enthalten oder nicht enthalten, wobei die Menge dieser und ggf. weiterer Zusatzstoffe vorzugsweise bis zu 40 Gew.-% beträgt.

Bevorzugt enthält das erfindungsgemäße Material
5 bis 99, 999 Gew.-%, insbesondere 20 bis 99,99 Gew.-% der Komponente a),
0,001 bis 5 Gew.-%, insbesondere 0,01 bis 3 Gew.-% der Komponente b),
0 bis 15 Gew.-%, insbesondere 1 bis 10 Gew.-% der Komponente c),
0 bis 70 Gew.-%, insbesondere 0 bis 30 Gew.-% weitere von a) bis c) verschiedenen Zusatzstoffen (Komponente d) und
0 bis 5 Gew.-%, insbesondere 0 bis 2 Gew.-% Wasser (Restfeuchte).

Bevorzugt beträgt das Gewichtsverhältnis der Komponente a) zu b) 1:1 bis 100000:1, insbesondere 10:1 bis 1000:1.

In einer weiteren bevorzugten Ausführungsform enthält das erfindungsgemäße Material 0 bis 70 Gew.-%, vorzugsweise 0 bis 65 Gew.-% organische Gerbstoffe insbesondere aber keine organischen Gerbstoffe. Bevorzugt enthält das erfindungsgemäße feste Material keinen mineralischen Gerbstoff.

Bevorzugt enthält das erfindungsgemäße Material keine Komponente d), das heißt keine zusätzliche Komponente außer a) und b) und ggf. c) und Wasser. In einer besonders bevorzugten Ausführungsform besteht das erfindungsgemäße Material nur aus den Komponenten a), b) und ggf. Wasser (Restfeuchte).

### Bevorzugt enthält das erfindungsgemäße Material

- 90 bis 99,999 Gew.-%, insbesondere 95 bis 99,99 Gew.-%, besonders bevorzugt 94,99 bis 99,98 Gew.-% der Carbamoylsulfonatgruppen-haltigen Verbindung der Komponente a),
- 0,001 bis 5 Gew.-%, insbesondere 0,01 bis 3 Gew.-% der Komponente b), jeweils bezogen auf das Material und
- 0 bis 5 Gew.-%, insbesondere 0 bis 2 Gew.-% Wasser (Restfeuchte).

Ebenfalls bevorzugt enthält das erfindungsgemäße Material zusätzlich 0 bis 15 Gew.-%, insbesondere 0 bis 10 Gew.-%, ganz besonders bevorzugt 0,01 bis 5 % der Komponente c), vorzugsweise Citronensäure, jeweils bezogen auf das Material.

Das Material kann vorzugsweise herstellungsbedingt 0 bis 5 Gew.-%, bevorzugt 0 bis 2% Gew.-%, bezogen auf das Material, eines Reaktionsproduktes aus einer Carbonsäure und dem eingesetzten Polyisocyanat enthalten.

In einer besonderen Ausführungsform kann das erfindungsgemäße Material auch Reaktionsprodukte aus Polyisocyanaten bzw. Polyisocyanat-Bisulfit-Addukten und den OH-funktionellen Emulgatoren wie beispielsweise den partiell veresterten Polyol-Alkoxylaten (Komponente b) enthalten, wobei diese Reaktionsprodukte Urethangruppen enthalten und ggf. über Carbamoylsulfonat-Endgruppen verfügen.

Solche Reaktionsprodukte sind beispielsweise auch durch Reaktion eines Überschusses an Polyisocyanat mit der Komponente b) erhältlich und als Zusatzstoff vorteilhaft einsetzbar.

In einer ebenfalls besonderen Ausführungsform enthält das erfindungsgemäße Material auch Reaktionsprodukte aus Polyisocyanaten bzw. Polyisocyanat-Bisulfit-Addukten und Citronensäure. Beispielsweise sind solche Reaktionsprodukte, die Urethangruppen und Carbamoylsulfonatgruppen enthalten, durch Reaktion eines Überschusses an Polyisocyanat mit der Komponente c) und anschließende Reaktion mit einem Bisulfit und/oder Disulfit erhältlich. Verbindungen dieses Typs sind beispielsweise Bisurethane aus 1 mol Hexamethylendiisocyanat und 2 mol Citronensäure oder beispielsweise das Monourethan aus 1 mol Hexamethylendiisocyanat und 1 Mol Citronensäure, wobei verbleibende NCO-Gruppen in situ mit Bisulfit und/oder Disulfit zur Carbamoylsulfonatgruppe abreagieren.

Besonders bevorzugte Zusammensetzungen sind solche enthaltend Carbamoylsulfonatgruppen-haltigen Verbindungen, die durch Umsetzung von wenigstens einem organischen Isocyanat mit wenigstens einem Bisulfit und/oder Disulfit und wenigstens einer Hydroxy-Polycarbonsäure (Komponente c), insbesondere Citronensäure, vorzugsweise in einer Menge von 0,05 bis 3, bevorzugt 0,1 bis 2 % Gew.-%, bezogen auf die Zusammensetzung, in Gegenwart einer Verbindung der Komponente b1) erhalten wurden.

Die bevorzugten erfindungsgemäßen Materialien enthalten weniger als 5%, besonders weniger als 1% an Harnstoffgruppen enthaltenden dimeren, trimeren oder polymeren Carbamoylsulfonaten, die durch Hydrolyse der Polyisocyanate bei der Synthese als Nebenprodukte gebildet werden können.

### Herstellung

Die Erfindung betrifft weiterhin ein Verfahren zur Herstellung des erfindungsgemäßen festen, partikulären Materials, das dadurch gekennzeichnet, dass man die Komponenten a) und b) ggf. mit weiteren Zusatzstoffen mischt.

Die Verbindung der Komponente a) kann auch beispielsweise durch Umsetzung wenigstens eines organischen Polyisocyanats mit wenigstens einem Bisulfit und/oder Disulfit in einem organischen oder wässrig-organischen Lösungsmittel wie beispielsweise Wasser/Dioxan analog der Vorgehensweise aus DE102006056479-A1 erhalten werden.

Die Erfindung betrifft weiterhin ein Verfahren zur Herstellung des erfindungsgemäßen festen, partikulären Materials, das dadurch gekennzeichnet ist, dass man wenigstens ein organisches Polyisocyanat mit wenigstens einem Bisulfit und/oder Disulfit in Gegenwart von Wasser und der Komponente b) und ggf. einer Carbonsäure der Komponente c) umsetzt, ggf. mit weiteren Zusatzstoffen versetzt, und entweder das partikuläre Material mit einem organischen Lösungsmittel ausfällt und nachfolgend trocknet oder die Reaktionsmischung trocknet.

Besonders bevorzugt ist bei dieser erfindungsgemäßen Verfahrensalternative, dass die Herstellung der Komponente a) durch Umsetzung wenigstens eines organischen Polyisocyanats mit wenigstens einem Alkali- oder Ammonium-Bisulfit und/oder Disulfit in Wasser in Gegenwart der Komponente b), insbesondere der Komponente b1) erfolgt.

Ganz besonders bevorzugt ist bei dieser erfindungsgemäßen Verfahrensalternative, dass die Herstellung der Komponente a) durch Umsetzung wenigstens eines organischen Polyisocyanats mit wenigstens einem Alkali- oder Ammonium-Bisulfit und/oder Disulfit in Wasser in Gegenwart der Komponente b), insbesondere der Komponente b1) und ggf. in Gegenwart der Komponente c) erfolgt.

Dazu sind je nach eingesetztem organischen Polyisocyanat und Reaktionstemperatur im allgemeinen Reaktionszeiten von 1 bis 12, vorzugsweise 1 bis 6 Stunden ausreichend. Die Umsetzung erfolgt vorzugsweise bei einer Temperatur von 0 bis 100°C, bevorzugt bei 10 bis 80°C, besonders bevorzugt bei 10 bis 60°C. Besonders bevorzugt werden Alkali-Bisulfite oder Alkali-Disulfite eingesetzt.

Die Umsetzung der organischen Polyisocyanate mit Alkali- oder Ammonium-Bisulfit und/oder Disulfit erfolgt in Wasser vorzugsweise bei 0 bis 100°C, bevorzugt bei 10 bis 80°C, besonders bevorzugt bei 10 bis 60°C in Gegenwart von wenigstens einer Verbindung der Komponente b1) bis alle NCO-Gruppen reagiert haben.

Dazu sind je nach eingesetztem organischem Polyisocyanat und Reaktionstemperatur im Allgemeinen ebenfalls Reaktionszeiten von 1 bis 12, vorzugsweise 1 bis 6 Stunden ausreichend.

Es werden insbesondere 0,001 bis 5 Gew.-%, insbesondere 0,01 bis 3 Gew.-% der Komponente b), jeweils bezogen auf das Material, beziehungsweise 0,001 bis 2,5, bevorzugt 0,01 bis 1,5 % der Komponente b), bezogen auf das wässrige Reaktionsgemisch, vor oder während der Zugabe des Polyisocyanats eingesetzt, wobei das wässrige Reaktionsgemisch einen Feststoffgehalt von 10 bis 50 Gew.-%, besonders bevorzugt von 25 bis 45 Gew.-% besitzt.

Ebenfalls bevorzugt ist es, die Umsetzung in Gegenwart einer Carbonsäure, vorzugsweise Oxalsäure, Bernsteinsäure, Glutarsäure, oder Adipinsäure, insbesondere weinigsten einer Hydroxy-Polycarbonsäure, vorzugsweise Citronensäure, Weinsäure oder Milchsäure oder Gemische daraus durchzuführen.

Es werden insbesondere 0 bis 3, bevorzugt 0 bis 2 % der Komponente c), bezogen auf das wässrige Reaktionsgemisch, bereits während der Reaktion des Polyisocyanats mit dem Bisulfit / Disulfit eingesetzt. Besonders bevorzugt ist der Zusatz einer Carbonsäuere, insbesondere Hydroxy-Carbonsäure der Komponente c) bereits vor oder während der Synthese der Komponente a). Bevorzugt wird bis zu 20% der gesamten Menge der Komponente c) bereits vor oder während der Reaktion des Polyisocyanats mit dem Bisulfit / Disulfit zugesetzt.

Die wässrigen Zusammensetzungen, die zur Trocknung eingesetzt werden, weisen vor der Trocknung vorzugsweise einen pH-Wert von 1 bis 5, bevorzugt von 2,0 bis 3,5 auf, wenn die Trocknung nicht sofort nach der Herstellung der Lösung vorgesehen ist.

Die wässrigen Zusammensetzungen, die zur Trocknung eingesetzt werden, weisen vor der Trocknung vorzugsweise einen pH-Wert von 1 bis 7, bevorzugt von 2,0 bis 6,0 auf, wenn die Trocknung sofort nach der Herstellung der Lösung vorgesehen ist.

Zur Einstellung dieses pH-Wertes ist es vorteilhaft, die Zusammensetzung durch Zugabe einer ausreichenden Menge einer puffernden Substanz den geeigneten pH-Bereich, insbesondere einen pH-Bereich von 1 bis 5, bevorzugt 2,0 bis 3,5 einzustellen und zu stabilisieren. Als geeignete organische Puffer hierfür kommen bevorzugt Mischungen aus Verbindungen der Komponente c) und deren Salzen in Frage. Als bevorzugte Salze kommen insbesondere Alkalisalze, vorzugsweise Natrium-oder Kaliumsalze in Frage.

Auch aus verfahrenstechnischer Sicht ist die Mitverwendung einer Hydroxy-Carbonsäure, insbesondere Citronensäure, während der Synthese sehr vorteilhaft. Die Geschwindigkeit der exothermen Reaktion mit dem Bisulfit lässt sich auf diesem Weg überraschend einfach beeinflussen und bietet einen zusätzlichen Vorteil und ein erhöhtes Maß an Sicherheit bei der Reaktionsführung.

In einer besonderen Ausführungsform enthält das erfindungsgemäße feste, partikuläre Material auch Reaktionsprodukte aus Polyisocyanaten bzw. Polyisocyanat-Bisulfit-Addukten und Citronensäure. Solche Reaktionsprodukte, die Urethangruppen und ggf. Carbamoylsulfonatgruppen enthalten, sind beispielsweise auch durch Reaktion eines Überschusses an Polyisocyanat mit der Komponente c) erhältlich. Verbindungen dieses Typs sind beispielsweise Bisurethane aus 1 mol Hexamethylendiisocyanat und 2 mol Citronensäure oder beispielsweise das Monourethan aus 1 mol Hexamethylendiisocyanat und 1 Mol Citronensäure, wobei verbleibende NCO-Gruppen mit Bisulfit und/oder Disulfit zur Carbamoylsulfonatgruppe abreagieren.

Es werden insbesondere 0,1 bis 50, bevorzugt 0,5 bis 20 Gew.- % an der Verbindung der Komponente b), bezogen auf die Gesamtmenge an eingesetztem Polyisocyanat zur Synthese eingesetzt. Das Emulgiervermögen der Komponenten b) ist bezogen auf die eingesetzten Polyisocyanate unterschiedlich. Generell ist es aber bevorzugt, eine möglichst geringe Menge an Komponente b) einzusetzen. Vorzugsweise wird daher eine Menge 0,1 bis 10 Gew.-% Komponente b) bezogen auf das eingesetzte Polyisocyanat zur Emulgierung des Polyisocyanats eingesetzt.

Weiterhin ist es möglich, die Herstellung der carbamoylsulfonatgruppenhaltigen Verbindungen kontinuierlich durchzuführen, wobei die Reaktionskomponenten kontinuierlich in ein Anlagenteil eingespeist werden, das eine innige Mischung der Komponenten erlaubt, und die Reaktionsmischung bei erhöhten Temperaturen, vorzugsweise von 20 bis 100°C und bei einer an die Temperatur angepassten kurzen Verweilzeit bspw. in einem Mikroreaktor zum Endprodukt umgesetzt wird, das erhaltene Reaktionsgemisch, gegebenenfalls nach Einstellung der Temperatur, pH-Wert, Konzentration und Zugabe weiterer Komponenten in einen Trocknungsapparat eingespeist wird, und nach dem Verdampfen des Wassers das feste, partikuläre Material aus der Anlage ausgetragen wird und in entsprechenden Behältern abgefüllt wird. Als Mikroreaktionssysteme eignen sich beispielsweise solche der Firma Ehrfeld BTS GmbH oder der Firma GEA/Niro.

Es ist möglich, Komponenten b), insbesondere b1), b2) oder b3) und gegebenenfalls die Komponenten c) während der Reaktion ebenfalls kontinuierlich der Reaktion zuzuführen.

Bei kontinuierlicher Fahrweise ist es möglich, die Reaktionstemperatur bei 20 bis 100°C einzustellen. Die Verweilzeit im Reaktionssystem kann durch Erhöhung der Reaktionstemperatur bis auf einige Minuten verkürzt werden.

In einer bevorzugten Ausführungsform der kontinuierlichen Synthese mittels einer Mikroreaktionsanlage wird eine Lösung aus Alkali-Bisulfit- bzw. Disulfit in Wasser mit Komponente b) gemischt. Diese Mischung und das Polyisocyanat werden nun getrennt und in der einem stöchiometrischen Verhältnis von Bisulfitgruppen (HSO₃-) zu NCO-Gruppen von 1,0 : 1,0 bis 1,2 : 1,0 , vorzugsweise 1,0 : 1,0 bis 1,05:1,0 entsprechenden Geschwindigkeit kontinuierlich einem Mischer zugeführt, der in eine Mikroreaktionsanlage integriert ist. Zum Beispiel können zur kontinuierlichen Herstellung Mikroreaktionsanlagen mit modularem Aufbau der Firma Ehrfeld BTS GmbH verwendet werden. Die beiden Flüssigkeitsströme werden vorzugsweise mit pulsationsfrei arbeitenden Hochdruckpumpen dosiert. Die dem Mischer zugeführten Flüssigkeiten werden durch die Mikrostruktur des Mischers innig vermischt, durch einen Wärmetauscher geleitet und anschließend in einem Mikroreaktor bei einer Temperatur von 20 bis 120°C, vorzugsweise mit einer Verweilzeit von einigen Sekunden bis 15 Minuten, zur Reaktion gebracht, so dass ein vollständiger Umsatz der NCO-Gruppen erreicht wird. Nach Verlassen des Reaktors wird die wässrige Produktlösung durch einen Wärmetauscher abgekühlt und über ein Auslass-Modul aus dem Mikroreaktionssystem in einen Rührbehälter oder Zwischenbehälter abgelassen. Die Lösung kann nun ggf. mit weiteren Zusatzstoffen wie der Komponente c oder der Komponente d) ) kontinuierlich gemischt und anschließend direkt in einen Sprühtrockner geleitet werden. Die Dosiergeschwindigkeit der Rohstoffe in die Mikroreaktionsanlage wird dabei vorteilhaft an die Geschwindigkeit des Austrags von sprühgetrocknetem Material aus dem Sprühtrockner angepasst. Es ist aber auch möglich, dass die Mikroreaktionsanlage verlassende Reaktionsgemisch in einen Rührbehälter oder Lagerbehälter abzulassen, aus dem der Sprühtrockner dann mit einer unterschiedlichen Geschwindigkeit gespeist werden kann. Für die Sprühtrockung wird die Einlasstemperatur vorzugsweise auf 120 bis 200°C, vorzugsweise auf 130°C bis 180°C eingestellt. Falls das feste Material eine Restfeuchte von mehr als 2% aufweist, kann es vorteilhaft sein, in einem nachgeschalteten, ebenfalls kontinuierlich betriebenen Trocknungsschritt zum Beispiel in einem Wirbelschicht-Trockner oder Schaufeltrockner die Restfeuchte auf einen Wert unter 2% zu senken. Das erhaltene Material wird dann kontinuierlich in entsprechende Behälter abgefüllt. Es kann vorteilhaft sein, bei dem kontinuierlichen Verfahren beispielsweise vor, während oder nach der Sprühtrocknung ein Entstaubungsmittel zuzusetzen, um ein staubfreies Produkt zu erhalten, das rieselfähig ist und vom Anwender leicht dosiert werden kann. Das erhaltene feste Material ist sehr gut löslich in Wasser (bei 20-25°C) und zeichnet sich als festes Material durch eine hervorragende Lagerstabilität auch bei hohen Temperaturen (60°C) aus.

Zur Trocknung der wässrigen Reaktionsgemische eignen sich, unabhängig davon, ob eine Zwischenisolierung der wässrigen Reaktionsmischung erfolgt oder nicht, die an sich bekannten Apparate wie Sprühtrockner, Dünnschichtverdampfer, Ausdampfschnecken, Apparate zur Kühlkristallisation oder Vakuumtrockner wie Apparate zur Gefriertrocknung oder Vakuum-trockner mit Zwangsförderung. Besonders geeignet sind Sprühtrockner, gegebenenfalls auch Sprühtrockner mit integrierter Wirbelschichttrocknung. Eine Nachtrocknung des vorgetrockneten Gutes kann erforderlich sein, so dass die Restfeuchte möglichst gering gehalten wird. Die Restfeuchte liegt üblicherweise im Bereich von 0 bis 5%, bevorzugt bei 0 bis 2%, besonders bevorzugt bei 0 bis 1%, bezogen auf festes Material.

Als geeignetes Verfahren für die Trocknung ist insbesondere die Sprühtrocknung zu nennen, vorzugsweise Einstoffsprühtrocknung mittels Hochdruck- bzw. Drallkammerdüsen oder Sprühtrocknung mittels Zerstäubungsscheiben, Gefriertrocknung mit vor- oder nachgeschalteter Granulation oder Trockenaufarbeitung, Aufbaugranulation beispielsweise nach dem Teller- oder Trommelgranulationsverfahren gegebenenfalls mit teilweise vorgetrocknetem Produkt, Wirbelschichttrocknung und -granulation, Mischagglomeration und -trocknung gegebenenfalls in Kombination mit Wirbelschicht- bzw. Fliessbetttrocknung. Ferner kommen Verfahren wie Mischagglomeration in Suspension mit gegebenenfalls nachgeschalteter Wirbelschicht- oder Fliessbetttrocknung, Granulation mittels Pastenverformung und nachgeschalteter Nachtrocknung und Zerkleinerung oder Pelletierung sowie Dampfstrahlagglomeration in Frage. Kombinationen der genannten Verfahren sind ebenfalls möglich.

Besonders bevorzugt sind die Verfahren der Sprühtrocknung mittels Hochdruck- bzw. Drallkammerdüsen, die Sprühtrocknung mit integrierter und/oder nachgeschalteter Wirbelschichtagglomeration und/oder -Trocknung, die Aufbaugranulation nach dem Tellerverfahren sowie die Wirbelschichtgranulation und -trocknung.

Die festen Carbamoylsulfonatgruppen-haltigen Verbindungen können nach verschiedenen Methoden hergestellt werden. Drei Methoden werden im Folgenden kurz beschrieben.

### Methode 1 Fällung der Carbamoylsulfonatgruppen-haltigen Verbindung aus wässriger Lösung.

Aus einer wässrigen Lösung, erhalten dadurch dass man wenigstens ein organisches Polyisocyanat mit wenigstens einem Bisulfit und/oder Disulfit in Gegenwart von Wasser und der Komponente b) und ggf. einer Carbonsäure der Komponente c) umsetzt, ggf. mit weiteren Zusatzstoffen versetzt wird das partikuläre Material mit einem organischen Lösungsmittel ausgefällt. Die Fällung erfolgt durch Mischen der wässrigen Lösung mit einem Überschuss eines zumindest teilweise wassermischbaren Fällungsmittel für die Komponente a), bevorzugt Ethanol, Methanol, n-Propanol, Isopropanol, Methoxypropanol, Aceton, Methylethylketon oder Ethylacetat. Ganz besonders bevorzugt ist Aceton.

Die einzusetzende wässrige Lösung hat bevorzugt einen Feststoffgehalt von 10 bis 50 Gew.-%, besonders bevorzugt von 25 bis 45 Gew.-%. Wenn Aceton oder Methylethylketon als Fällungsmittel verwendet werden, kann man eine besondere Reinheit der Carbamoylsulfonatgruppenhaltigen Verbindung erhalten.

Die einzusetzende wässrige Lösung hat vorzugsweise einen pH-Wert von 2,0 bis 6,0, besonders bevorzugt einen pH-Wert von 2,3 bis 4,0, ganz besonders bevorzugt einen pH-Wert von 2,5 bis 3,5.

Die Fällung mit dem organischem Lösemittel erfolgt bevorzugt unterhalb des Siedepunkts des organischen Lösemittels, besonders bevorzugt unterhalb von 50°C, ganz besonders bevorzugt im Temperaturbereich von 0°C und 40°C.

Das organische Lösemittel wird vorzugsweise im Überschuss eingesetzt. Das Gewichtsverhältnis Wasser zu Lösemittel beträgt vorzugsweise 1 : 1 bis 1 : 10, besonders bevorzugt 1 : 1 bis 1 : 5. Es ist möglich, das organische Lösemittel zu der wässrigen Lösung, enthalten die Carbamoylsulfonatgruppen-haltigen Verbindung, zu geben oder die wässrige Lösung umgekehrt zu dem vorgelegten organischen Lösmittel hinzuzugeben. In der Regel wird die Mischung während der Fällung gerührt.

Das ausgefällte Produkt wird anschließend abgetrennt, vorzugsweise durch Dekantieren, Zentrifugieren oder Filtration, vorzugsweise durch Absaugen unter Verwendung von Filtermedien, beispielsweise mit einer Drucknutsche, einer Kammerfilterpresse, gegebenenfalls mit frischem Lösemittel nachgewaschen und anschließend getrocknet. Der Trennvorgang kann auch kontinuierlich erfolgen, wenn eine Kombination mit der oben beschriebenen kontinuierlichen Herstellung der wässrigen Lösung vorgesehen ist. Die Trocknung des festen Materials erfolgt vorzugsweise im Vakuum bei einer Temperatur von -20 bis + 40°C. Vorzugsweise wird die Temperatur zu Beginn der Trocknung möglichst niedrig gehalten und gegen Ende der Trocknung auf die Endtemperatur erhöht. Die Ausbeute des festen Materials ist bei der Verwendung von Aceton als Fällungsmittel und bei den erwähnten Trocknungsbedingungen im Vakuum und bei einer Temperatur von -20 bis + 40°C in den meisten Fällen nahezu quantitativ. Das nach der Abtrennung des festen Materials erhaltene Filtrat kann bei Bedarf anschließend nachgefällt werden. Die vereinigten Filtrate werden anschließend vorzugsweise in geeigneter Form, zum Beispiel durch eine Vakuum-Destillation, aufgearbeitet, um das organische Lösemittel zurückzugewinnen.

### Methode 2

### Trocknung einer wässrigen Lösung, enthaltend die Carbamoylsulfonatgruppen-haltige Verbindung durch thermische Trocknungsverfahren.

Einer wässrigen Lösung, erhalten dadurch dass man wenigstens ein organisches Polyisocyanat mit wenigstens einem Bisulfit und/oder Disulfit in Gegenwart von Wasser und der Komponente b) und ggf. einer Carbonsäure der Komponente c) umsetzt, ggf. mit weiteren Zusatzstoffen versetzt wird und ein Feststoffgehalt von 10 bis 50 Gew.-%, besonders bevorzugt von 35 bis 50 Gew.-% besitzt wird wie nachfolgend beschrieben sprühgetrocknet..

Die einzusetzende wässrige Lösung hat vorzugsweise einen pH-Wert von 2,0 bis 6,0, besonders bevorzugt einen pH-Wert von 2,3 bis 4,0, ganz besonders bevorzugt einen pH-Wert von 2,5 bis 3,5.

Die dem Trockner zugeführte wässrige Lösung wird bevorzugt auf eine Temperatur unterhalb von 50°C eingestellt, ganz besonders bevorzugt ist ein Temperaturbereich von 10°C bis 40°C.

Zur Trocknung eigenen sich die in der Trocknungstechnik üblichen technischen Apparate. Besonders bevorzugt sind Verfahren, bei denen Sprühtrockner eingesetzt werden. Dabei sind alle bekannten Verfahrensvarianten geeignet. So eignen sich beispielsweise Sprühtrockentürme mit Einstoffdüsen, bei denen die wässrige Lösung in den Kopf des Sprühtrockners mittels Überdruck eingedüst wird, wobei die Teilchengröße unter anderem über die verwendeten Düsendurchmesser einstellbar ist. Weiterhin geeignet sind beispielsweise Sprühtrockner mit einem Scheibenzerstäuber, bei dem die wässrige Lösung auf einen extern angetriebenen rotierenden Teller aufgebracht und durch Zentrifugalkräfte fein verteilt wird. Die Einlasstemperatur im Sprühtrockner beträgt beispielsweise 100°C bis 250°C, bevorzugt jedoch 110°C bis 200°C, besonders bevorzugt 110°C bis 180°C. Die Auslasstemperatur beträgt beispielsweise 20 bis 100°C, bevorzugt 30°C bis 90°C, besonders bevorzugt 50 bis 90°C.

Die Restfeuchte des erhaltenen Pulvers liegt vorzugsweise unter 10%, bevorzugt unter 5%, besonders bevorzugt unter 2% und ganz besonders bevorzugt unter 1%.

Die erhaltenen Carbamoylsulfonatgruppen-haltigen Verbindungen fallen vorzugsweise als farblose Pulver an, die nur wenig stauben. Gegebenenfalls kann es vorteilhaft sein, dass dem zu trocknenden Material vor, während oder nach der Sprühtrocknung ein Entstaubungsmittel zugesetzt wird. Dabei ist es bevorzugt, das Entstaubungsmittel der wässrigen Lösung zuzusetzen. Weiterhin ist es möglich, das Entstaubungsmittel während des Sprühtrocknungsvorgangs in den Trockner einzubringen. Weiterhin ist es möglich, das erhaltene Pulver auf deren Oberfläche mit einem Entstaubungsmittel zu belegen.

Als Entstaubungsmittel kommen die oben genannten in Frage.

### Methode 3 = Isolierung des festen Materials durch Kryotechniken

Es ist auch möglich, die Carbamoylsulfonatgruppen-haltige Verbindung aus der unter Methode 1 und 2 beschriebenen wässrigen Lösung durch Kühlkristallisation auszufällen oder durch Gefriertrocknung aufzuarbeiten. Die Aufarbeitung erfolgt dabei vorzugsweise in bekannter Weise durch eine mechanische Abtrennung des Feststoffs beziehungsweise durch ein Verdampfen des Wasser aus der eingefrorenen wässrigen Lösung.

Ganz besonders bevorzugt zur Trocknung der wässrigen Reaktionsgemische sind die Sprühtrocknungsverfahren gemäß Methode 2.

Es ist möglich, gegebenenfalls weitere Zusatzstoffe dem sprühgetrockneten Pulver der Komponente a), das bereits die Komponente b), gegebenenfalls auch Komponente c) und gegebenenfalls auch Komponente d) enthält, zuzumischen. Besonders bevorzugt ist es, eine flüssige Zusammensetzung enthaltend die Komponenten a), b) und gegebenenfalls c) und gegebenenfalls weitere Zusatzstoffe (Komponente d) einer gemeinsamen Sprühtrocknung des Gemisches zu unterziehen. Es ist ebenfalls möglich, die weiteren Zusatzstoffe in fester Form dem bereits getrockneten Material aus Komponente a), b) und gegebenenfalls c) und gegebenenfalls d) zuzumischen.

### Anwendung

Das nach der Sprühtrocknung erhaltene feste, partikuläre Material wird in der Regel als staubarmes und rieselfähiges Pulver enthaltend die Carbamoylsulfonatgruppenhaltige Verbindungen erhalten. Dieses Pulver ist in kaltem Wasser leicht löslich und kann als Feststoff direkt ins Gerbfass dosiert werden. Ein Vorlösen des Pulvers mit Wasser ist nicht erforderlich, ist aber je nach Einsatzgebiet ebenfalls möglich. Diese erhaltene wässrige Lösung ist beispielsweise bei einem pH-Wert von 6 bis 8 für die Anwendung ausreichend stabil. Enthält das Material bereits auch die Komponente c), so ist die wässrige Lösung wesentlich länger haltbar. Es ist auch möglich, durch Erhöhung des Anteils an Komponente c) die Eigenschaften des Pulvers so einzustellen, dass eine wässrige Lösung des Pulvers nach Wiederauflösen in Wasser bei 20°C einen pH-Wert von 2 bis 4 aufweist. Die so hergestellten wässrigen Lösungen der pulverförmigen Zusammensetzungen sind in diesem Fall mehrere Monate bei 30°C lagerstabil.

Für den Fall, dass die pulverförmige Zusammensetzung auch weitere Zusatzstoffe (Gerbstoffe) enthält, die wiederum Komponenten enthalten, die sich in Wasser nicht vollständig klar lösen, wird die wässrige Lösung der entsprechenden pulverförmigen Zubereitung, die die Komponente a) enthält, natürlich eine Trübung durch solche feinteilige Partikel aufweisen. Diese Anteile werden aber während des Walkvorgangs im Gerbfass allmählich in den Lederquerschnitt eingearbeitet, so dass am Ende des Gerbprozesses eine klare Restflotte resultiert.

Es ist bevorzugt, das erfindungsgemäße feste, partikuläre Material in fester Form direkt ins Gerbfass zu dosieren. Das erfindungsgemäße feste, partikuläre Material ist in der Regel ein feines, rieselfähiges Pulver, das sich einfach und staubfrei dosieren lassen und das sich in Wasser innerhalb von wenigen Sekunden bis Minuten homogen verteilt bzw löst. Es findet beim Auftreffen des Materials auf die Wasseroberfläche keine Verklumpung statt und eine Schädigung des Substrats im Gerbprozess durch eine lokale Überkonzentration an Wirkstoff wird somit vermieden.

Durch spezielle an sich bekannte Verfahren der Trocknungstechnik ist es auch möglich, spezielle Strukturen von festen Zusammensetzungen herzustellen, wie Brombeerstrukturen oder Strukturen mit Kern-Schale-Aufbau. Dadurch kann das Löseverhalten der festen Zusammensetzungen in Wasser in weiten Grenzen eingestellt werden. Von Instant-Pulvern bis hin zu slow-release-Zubereitungen oder Produkten, die eine kontinuierliche und lineare Freisetzung von Komponenten oder eine zeitlich stufenweise erfolgende Auflösung der Bestandteile während des Gerbprozesses ermöglichen. So ist es zum Beispiel möglich, den pH-Wert während des Gerbprozesses beispielsweise durch langsame Freisetzung einer festen Base oder festen Säure so zu steuern, dass eine aufwändige pH-Steuerung des Gerbprozesses nicht erforderlich ist, sondern quasi automatisch erfolgt.

Die Erfindung betrifft weiterhin die Verwendung des erfindungsgemäßen festen, partikulären Materials als Vorgerbstoffe, Gerbstoffe oder auch als Nachgerbstoffe von Häuten und Fellen.

Unter Vorgerbstoff wird im Rahmen dieser Erfindung ein Produkt verstanden, mit dem eine Haut oder ein Fell in einen Zustand überführt werden kann, der handelsübliche mechanische Behandlungen wie Abwelken oder Falzen ermöglicht, aber zur Fertigstellung des Leders oder Pelzes weitere Behandlungsschritte mit gerbenden Substanzen benötigt.

Die Erfindung betrifft weiterhin ein Verfahren zum Gerben von Häuten und Fellen, das dadurch gekennzeichnet ist, dass man nach Waschen, Äschern, gegebenenfalls Enthaarung und Entkälkung vorbehandelte Häute oder Felle mit dem erfindungsgemäßen Material behandelt.

Die Erfindung betrifft ebenfalls das nach dem erfindungsgemäßen Gerbverfahren erhaltene Wet-White-Leder, worunter ein chromfrei gegerbtes Leder-Zwischenprodukt zur mechanischen Behandlung und weiteren (Nach-)Gerbung verstanden wird.

Für die Gerbung von Fellen entfällt die Enthaarung selbstverständlich.

Die entsprechend vorbereiteten Häute (nachfolgend Blössen genannt) werden vorzugsweise in einem handelsüblichen Gerbfass in wässriger Flotte bei einer Temperatur von 10°C bis 60 °C und einem pH von 5 bis 10, bevorzugt 7 bis 9, mit 0,5 bis 10 %, bevorzugt 1 bis 4 % (bezogen auf den Anteil der reinen Komponente a)) des erfindungsgemäßen Materials in der Art behandelt, dass man ein gegerbtes Zwischenprodukt mit einer Schrumpftemperatur von mindestens 65°C, bevorzugt mindestens 68°C, besonders bevorzugt mindestens 70°C erhält. Die Schrumpftemperatur wird nach dem Fachmann bekannten Methoden ermittelt, beispielsweise durch Erwärmen des gegerbten Zwischenproduktes durch Eintauchen in ein Wasserbad, dessen Temperatur mit einer bestimmten Heizrate erhöht wird, bis die Kontraktion des Materials beobachtet wird. Die bei Kontraktion erreichte Temperatur wird am Display des Testgeräts abgelesen (Leather Shrinkage Tester). Die Schrumpftemperatur kann auch mittels der dem Fachmann bekannten Differential Scanning Calorimetry (DSC) - Methode ermittelt werden.

Bevorzugt lässt man nach Zugabe des erfindungsgemäßen Materials das Produkt vorzugsweise 0,1 bis 8 h, bevorzugt 0,2 bis 2 h bei einem pH im Schnitt der Blösse von 8 bis 10 und einem Flotten-pH von 7 bis 8 penetrieren und setzt dann ein Fixiermittel hinzu. Als Fixiermittel sind in der Gerberei an sich bekannte Basen oder deren Mischungen geeignet, beispielsweise Natronlauge, Alkalicarbonate, Alkalihydrogencarbonate, Magnesiumoxid, Dolomit, tertiäre Amine etc, besonders aber Dolomit, Magnesiumoxid, Natriumcarbonat und Natronlauge. Die Fixierung erfolgt dabei vorzugsweise über einen Zeitraum von 2 bis 24 h, bevorzugt 4 bis 12 h bei einem Flotten pH von 7 bis 10, bevorzugt einem Flotten-pH von 7,0 bis 8,5.

Es ist auch möglich, die Gerbung durch Ansäuern auf pH 4 bis 6 oder Zusatz von Ammoniak oder einer primären oder sekundären Aminoverbindung zu unterbrechen. Dies ist insbesondere dann vorteilhaft, wenn eine zu starke Adstringenz der Flotte vermieden werden soll und eine teilweise Inaktivierung des Gerbstoffs gewünscht ist. Diese zusätzlichen Maßnahmen sind geeignet, um den Gerbprozess in vorteilhafter Weise zu beeinflussen.

Als Aminoverbindungen eignen sich beispielsweise Ethanolamin, Diethanolamin, Propylamin, Butylamin, Hydroxypropylamin, Dihydroxypropylamin, 3-Aminopropyl-triethoxysilan, 3-Aminopropyl-trimethoxysilan, N-(2-Aminoethyl)-3-aminopropyl-triethoxysilan, N-(2-Aminoethyl)-3-aminopropyl-trimethoxysilan, Bis(3-triethoxysilylpropyl)amin, Bis(3-trimethoxysilylpropyl)amin, Hydroxyethylmorpholin, Hydroxyethyl-cyclohexylamin, Hydroxypropylmorpholin, Hydroxypropylcyclohexylamin., Hydroxyethyl-ethylendiamin, Hydroxypropyl-ethylendiamin, Bis(hydroxyethyl)-ethylendiamin, Bis(hydroxypropyl)-ethylendiamin,

Insbesondere die oben erwähnten Silane sind geeignet, um während des Gerbprozesses innerhalb des Substrates durch Hydrolyse zu Silanolgruppen und Eigenkondensation der Silanolgruppen zu Polysiloxanylgruppen zusätzlich ein dreidimensionales Sekundärnetzwerk aufzubauen und können daher in vorteilhafter Weise zu einer weiteren Stabilisierung des Hautmaterials beitragen. Dabei kann auch die Anwesenheit von mineralischen Füllstoffen die stabilisierende Wirkung verstärken. Geeignete mineralische Füllstoffe sind beispielsweise Siliciumdioxidhaltige Materialien wie hydrolytisch hergestellte oder pyrolytisch hergestellte Kieselsäuren, gemahlene Gläser, Schichtsilikate, Aluminiumsiliciate, Zirkoniumdioxid, Titandioxid. Solche mineralischen Füllstoffe können auch eine durch organofunktionelle Silane speziell behandelte und chemisch modifizierte Oberfläche aufweisen. Solche Materialien sind kommerziell verfügbar. Die Stabilisierung der Haut ist besonders bei der Verwendung als Vorgerbstoff ein erwünschter Effekt, um beispielsweise die mechanische Bearbeitung während des Falzvorgangs positiv zu beeinflussen. Auch kann dadurch die Schrumpftemperatur günstig beeinflusst werden. Diese Silane können auch in der Nachgerbung in Kombination mit dem erfindungsgemäßen Material eingesetzt werden, um die haptischen Eigenschaften (Fülle, Weichheit) und die färberischen Eigenschaften (Egalität, Durchfärbung) zu beeinflussen.

Es ist besonders vorteilhaft, einen niedrigen Anfangs-pH der Flotte von 6 bis 7 zur Penetration des Gerbstoffs zu wählen und die Fixierung in einem pH-Bereich zwischen 7,5 und 8,5 und durch Erhöhung der Temperatur zu regulieren.

Die erhaltenen, gegerbten Zwischenprodukte eignen sich für die mechanische Weiterverarbeitung durch z. B. Abwelken, Falzen oder Spalten. Darüber hinaus zeichnen sich diese Zwischenprodukte durch eine ausgesprochen weiße, klare und lichtechte Eigenfarbe aus, was gegenüber mit Glutardialdehyd gegerbten Ledern ein deutlicher Vorteil ist. Die vorgegerbten Zwischenprodukte können mit dem Fachmann an sich bekannten Verfahren nachgegerbt und zu weichen und luftigen Crustledern fertig gestellt werden.

Die Erfindung betrifft weiterhin einen Verfahren zur Herstellung von Leder und Pelzen, dadurch gekennzeichnet, dass in wässriger Flotte bei einer Temperatur von 10 °C bis 60 °C und einem pH von 5 bis 10, bevorzugt 7 bis 9 vorbereitetes Blössenmaterial (d.h. für die Gerbung konditionierte Felle oder entkälktes und/oder gebeiztes Blössenmaterial) mit 0,5 bis 10 %, bevorzugt 1 bis 4 % (bezogen auf Wirkstoff der Komponente a)) des erfindungsgemäßen Materials solange behandelt, bis man ein gegerbtes Zwischenprodukt mit einer Schrumpftemperatur von mindestens 65°C, bevorzugt mindestens 68°C, besonders bevorzugt mindestens 70°C erhält.

Liegt die Schrumpftemperatur niedriger, ist die mechanische Bearbeitung der gegerbten Zwischenprodukte, des sog. wet white-Materials, auf z.B. Falzmaschinen problematisch, da das wet white Material zu stark an den Messerwalzen klebt und sich schlecht verarbeiten lässt. Lässt man dagegen die Gerbung länger laufen, dosiert mehr Gerbstoff oder führt eine Fixierung bei höheren pH-Werten durch, können wesentlich höhere Schrumpftemperaturen erreicht werden. Diese sind aber für die mechanische Bearbeitung der Blössen nicht erforderlich.

In einer gesonderten Ausführung der Erfindung können die Eigenschaften zur mechanischen Weiterverarbeitung sowie die endgültigen Ledereigenschaften den Anforderungen der Kunden angepasst werden, indem vor, während oder nach der Zugabe der erfindungsgemäßen Zusammensetzung weitere in der Gerberei typische Stoffe der Gerbflotte zugegeben werden.

Dazu gehören dem Fachmann an sich bekannte, handelsübliche organische organische Gerbstoffe wie Syntane, Harzgerbstoffe, vegetabile Gerbstoffe, füllende und weichmachende Polymer(nach)gerbstoffe, Fettungsmittel und Hydrophobiermittel. Vorzugsweise werden diese Mittel in den nachfolgenden Nachgerbschritten in den für wet white üblichen Mengen eingesetzt.

Vorteil des erfindungsgemäßen Gerbprozesses ist, dass Leder mit einem breiten Spektrum an Eigenschaften erhalten werden können und die bei der mechanischen Bearbeitung Falzspäne vielseitig als Rohstoffe verwendet werden können, u.a. auch zur Herstellung von wertvollen Produkten, die im Lederherstellungsprozess eingesetzt werden können. Dadurch wird ein wesentlicher Beitrag geliefert, die Abfälle bei der Lederherstellung weiter zu vermindern.

### Beispiele

### Beispiel A1

### (Fällung einer analog zu EP-A 0690135 hergestellten Lösung mit Aceton. (Einsatz 14,9 % Emulgator bezogen auf HDI, Bisulfit : NCO = 1,092 : 1,0)

Unter Stickstoff wurden 43,20 g (0,0192 Mol) eines auf n-Butanol gestarteten Ethylenoxid-Propylenoxid-Polyethers mit einem Molekulargewicht von 2250 g/mol und einem Ethylenoxidgruppen-Gehalt von 85% (= Komponente b3) bei 120°C und 50 mbar 2 Stunden entwässert. Dann wurden bei 60°C unter Stickstoff 290,2 g (1,7253 Mol) Hexamethylen-diisocyanat zugegeben und das Reaktionsgemisch auf 100 °C erwärmt. Es wird eine Stunde bei 100° nachgerührt. NCO-Gehalt bestimmt (berechnet 43,2%, gefunden 43,7%). 193,0 g dieses Reaktionsprodukts wurden innerhalb von 30 Minuten bei 25°C zu 857,0 g Natriumbisulfit-Lösung (26,5% in Wasser) zugetropft. Die Mischung wird 16 Stunden bei Raumtemperatur nachgerührt. Man erhält eine klare, farblose 40%ige Lösung mit pH 4,8.
Dann werden 2100 ml Aceton zugegeben. Unter Kühlung auf 15°C wird noch 2 Stunden nachgerührt. Der ausgefallene weiße Niederschlag wird abgesaugt, mit Aceton nachgewaschen und im Vakuum bei 20°C bis zur Gewichtskonstanz getrocknet (isolierte Ausbeute: 87%, Restfeuchte kleiner 1%).

Eine 35%ige farblose Lösung des Produkts in Wasser hatte einen pH-Wert von 5,2.

### Beispiel A2

### (Einsatz 16,7 % Emulgator, bezogen auf HDI, 10 mol% Überschuss Bisulfit)

Zu einer Lösung aus 57,4 g eines verzweigten Tridecylalkohol-Ethoxylats mit 10 mol EO (= Komponente b3) in 2112,1 g Natriumbisulfit-Lösung (22,1% in Wasser) werden bei Raumtemperatur innerhalb von 2 Stunden unter Rühren 344,2 g Hexamethylendiisocyanat zudosiert. Man lässt die Temperatur bis 50°C steigen, rührt 2 Stunden bei 45-50°C nach und kühlt dann auf 25°C ab. Nach 16 Stunden erhält man eine klare Lösung mit einem Festgehalt von 34,2% und pH 5,92.

1000 g dieser Lösung werden bei Raumtemperatur mit 4000 ml Aceton versetzt. Man rührt 30 Minuten nach und saugt den ausgefallenen Feststoff ab. Der weisse Niederschlag wird mit Aceton gewaschen und im Vakuum bei 20°C bis zur Gewichtskonstanz getrocknet (isolierte Ausbeute 93,3%, Restfeuchte kleiner 1%).

### Eine 35%ige farblose Lösung des Produkts in Wasser hatte einen pH-Wert von 5,80.

Nach einer Lagerzeit von 4 Wochen bei 40°C und 60°C wurde gemäss IR-, ¹H- und ¹³C-NMR-Spektrum keine Veränderung des festen Produkts im Vergleich zum Ausgangsmaterial vor der Wärmelagerung festgestellt.

### Beispiel A3

### (Einsatz 7,1 % Emulgator, bezogen auf HDI, Molverhältnis Bisulfit: NCO = 1 : 1)

Zu einer Lösung aus 12,3 g Sorbitan-polyethylenglycol (20)-monododecanoat (z.B. Eumulgin SML 20 (Cognis) oder Tween 20 (Croda) (= Komponente b1), das mit insgesamt 20 Ethylenoxid-Einheiten pro Sorbitan-Einheit alkoxyliert ist (HLB 16,7), in 266,2 g Wasser und 553,4 g Natriumbisulfitlösung (NaHSO₃, 38-40% in Wasser) werden bei 20°C 174,4 g Hexamethylendiisocyanat unter Rühren in 20 Minuten zudosiert und die Temperatur der Reaktionsmischung bis 50°C erhöht. Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Man erhält eine klare Lösung mit einem Festgehalt von 40,0% und einem pH-Wert von 5,98.

Zu dieser Lösung werden bei Raumtemperatur 2000 ml Aceton zugegeben. Man rührt 2 Stunden nach, wobei gleichzeitig auf 15 °C abgekühlt wird. Der ausgefallene weisse Feststoff wird abgesaugt, mit Aceton gewaschen und im Vakuum bei 20°C bis zur Gewichtskonstanz getrocknet (isolierte Ausbeute 95,7%, Restfeuchte kleiner 1%).

Konzentration Bisulfit-Addukt (HPLC-MS): 97,7%
Die Lösung des Produkts in Wasser ist bei einer Konzentration von 35% klar, pH-Wert: 5,95. Die Lösung von 5 g Produkt in 50 ml Wasser hatte einen pH-Wert von 6,15.
Nach einer Lagerzeit von 4 Wochen bei 40°C und 60°C wurde gemäss IR, ¹H- und ¹³C-NMR-Spektrum keine Veränderung des festen Produkts im Vergleich zum Ausgangsmaterial vor der Wärmelagerung festgestellt.

### Beispiel A4

### (Fällung einer analog zu P00100489 hergestellten Lösung mit Aceton) (Einsatz 7,1 % Emulgator, bezogen auf HDI, Na₂S₂O₅, Molverhältnis Bisulfit: NCO = 1 : 1)

Zu einer Lösung aus 32,6 g Sorbitan-polyethylenglycol (20)-monododecanoat (z.B. Eumulgin SML 20 (Cognis) oder Tween 20 (Croda) (= Komponente b1), das mit insgesamt 20 Ethylenoxid-Einheiten pro Sorbitan-Einheit alkoxyliert ist (HLB 16,7), in 1648,3 g Wasser und 522,0 g NatriumDisulfit (Na₂S₂O₅) werden bei 20°C 461,9 g Hexamethylendiisocyanat unter Rühren in 120 Minuten zudosiert und die Temperatur der Reaktionsmischung bis 50°C erhöht. Es wird noch 1 Stunde bei 50°C nachgerührt, wobei das Reaktionsgemisch klar wird. Dann wird innerhalb von 2 Stunden auf 25°C abgekühlt. Man erhält eine klare Lösung mit einem Festgehalt von 38,9% und einem pH-Wert von 6,32.

Zu dieser Lösung werden dann bei Raumtemperatur 5330 ml Aceton zugegeben. Man rührt 16 Stunden nach. Der ausgefallene weiße Feststoff wird abgesaugt, mit Aceton gewaschen und im Vakuum bei 20 bis 40 °C bis zur Gewichtskonstanz getrocknet (isolierte Ausbeute 87,8%, Restefeuchte kleiner 1%). Aus dem Filtrat kann durch Zugabe von weiterem Aceton Produkt nachgefällt werden, so dass eine Gesamtausbeute von ca. 97 % resultiert.

Konzentration Bisulfit-Addukt (HPLC-MS): 96,4% Reinheit
Eine 35%ige farblose Lösung des Produkts in Wasser hatte einen pH-Wert von 5,4.

Nach einer Lagerzeit von 4 Wochen bei 40°C und 60°C wurde gemäß IR, ¹H- und ¹³C-NMR-Spektrum keine Veränderung des festen Produkts im Vergleich zum Ausgangsmaterial vor der Wärmelagerung festgestellt.

### Beispiel A5

### (7,1% Komp. b), bezogen auf HDI) Bisulfit:NCO = 1,05:1

Zu einer Lösung aus 9,9 g Laurylalkohol-Ethoxylat, das mit 10 Ethylenoxid-Einheiten alkoxyliert ist (HLB 13,8) (= Komponente b3), in 326,5 g Wasser und 461,7 g Natriumbisulfitlösung (NaHSO₃, 38-40% in Wasser) werden bei 20°C 138,6 g Hexamethylendiisocyanat unter Rühren in einer Portion zugegeben. Dann wird die Temperatur der Reaktionsmischung innerhalb von 60 Minuten auf 50°C erhöht. Bei 50°C werden 7,8 g Citronensäure Monohydrat gelöst in 7,8 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Der pH-Wert der Lösung beträgt 4,36. Dann werden 23,6 g Citronensäure Monohydrat gelöst in 23,6 g Wasser zugegeben und die Konzentration durch Zugabe von 20,0 g Wasser eingestellt. Man erhält eine klare 35,1 %ige Lösung mit pH 3,09.

Zu dieser Lösung werden bei Raumtemperatur 2000 ml Aceton zugegeben. Man rührt 2 Stunden nach, wobei gleichzeitig auf 15 °C abgekühlt wird. Der ausgefallene weiße Feststoff wird abgesaugt, mit Aceton gewaschen und im Vakuum bei 20°C bis zur Gewichtskonstanz getrocknet (isolierte Ausbeute 91,7%, Restfeuchte kleiner 1%).

### Beispiel A6

### (14,5% Komp. b), bezogen auf HDI) Bisulfit:NCO = 1,05:1

Zu einer Lösung aus 9,9 g Laurylalkohol-Ethoxylat, das mit 5 Ethylenoxid-Einheiten alkoxyliert ist (HLB 10,5) (= Komponente b3), in 326,5 g Wasser und 461,7 g Natriumbisulfitlösung (NaHSO₃, 38-40% in Wasser) werden bei 20°C 138,6 g Hexamethylendiisocyanat unter Rühren in einer Portion zugegeben. Dann wird die Temperatur der Reaktionsmischung innerhalb von 60 Minuten auf 50°C erhöht. Bei 50°C werden 7,8 g Citronensäure Monohydrat gelöst in 7,8 g Wasser zugegeben.

Es wird noch 15 Minuten bei 50°C nachgerührt. Dann werden 9,9 g Laurylalkohol-Ethoxylat, das mit 30 Ethylenoxid-Einheiten alkoxyliert ist (HLB 17,3) (= Komponente b3), zugegeben und 30 Minuten bei 50°C nachgerührt, wobei kein klares Reaktionsgemisch erhalten wird. Der pH-Wert der Lösung beträgt 5,25. Dann werden 7,8 g Citronensäure Monohydrat zugegeben und 45 Minuten bei 50°C nachgerührt. Dann wird innerhalb von 2 Stunden auf 23°C abgekühlt und ein pH-Wert von 4,12 gemessen. Es werden 23,6 g Citronensäure Monohydrat gelöst in 23,6 g Wasser zugegeben und die Konzentration durch Zugabe von 20,0 g Wasser eingestellt. Man erhält eine trübe 36,1 %ige Lösung mit pH 3,21.

Zu dieser Lösung werden bei Raumtemperatur 2000 ml Aceton zugegeben. Man rührt 1 Stunde nach. Der ausgefallene weisse Feststoff wird abgesaugt, mit Aceton gewaschen und im Vakuum bei 20°C bis zur Gewichtskonstanz getrocknet (isolierte Ausbeute 87%, Restfeuchte kleiner 1%). **Beispiel A7**(7,1% Komp. b), bezogen auf HDI) Bisulfit:NCO = 1,05:1Zu einer Lösung aus 9,9 g Oleylalkohol-Ethoxylat, das mit 20 Ethylenoxid-Einheiten alkoxyliert ist (HLB 15,0) (= Komponente b3), in 326,5 g Wasser und 461,7 g Natriumbisulfitlösung (NaHSO₃, 38-40% in Wasser) werden bei 20°C 138,6 g Hexamethylendiisocyanat unter Rühren in einer Portion zugegeben. Dann wird die Temperatur der Reaktionsmischung innerhalb von 40 Minuten auf 50°C erhöht. Bei Erreichen der 50°C werden 7,8 g Citronensäure Monohydrat gelöst in 7,8 g Wasser zugegeben. Es wird noch 1 Stunde bei 50°C nachgerührt, wobei ein klares Reaktionsgemisch erhalten wird. Dann wird innerhalb von 2 Stunden auf 23°C abgekühlt. Der pH-Wert der Lösung beträgt 4,16. Es werden 23,6 g Citronensäure Monohydrat gelöst in 23,6 g Wasser zugegeben und die Konzentration durch Zugabe von 15,0 g Wasser eingestellt. Man erhält eine klare 35,0 %ige Lösung mit pH 2,94.

Zu dieser Lösung werden bei Raumtemperatur 2000 ml Aceton zugegeben. Man rührt 2 Stunden nach. Der ausgefallene weisse Feststoff wird abgesaugt, mit Aceton gewaschen und im Vakuum bei 20°C bis zur Gewichtskonstanz getrocknet (isolierte Ausbeute 90%, Restfeuchte kleiner 1%).

### Beispiel A8

### (7,1% Komp. b), bezogen auf HDI) (Konzentration: 40%, Bisulfit:NCO = 1,05:1)

Zu einer Lösung aus 97,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 2000 g Wasser und 4617,2 g Natriumbisulfitlösung (NaHSO₃, 38-40% in Wasser) werden bei 25°C und einem pH-Wert von 4,14 unter Rühren 1385,6 g Hexamethylendiisocyanat zugegeben. Dann wird die Temperatur der Reaktionsmischung innerhalb von 35 Minuten auf 50°C eingestellt. Der pH-Wert beträgt 5,34. Dann werden 78,1 g Citronensäure Monohydrat gelöst in 64,7 g Wasser zugegeben.

Es wird noch 1 Stunde bei 50°C nachgerührt, wobei das Reaktionsgemisch klar wird. Dann wird innerhalb von 2 Stunden auf 25°C abgekühlt. Es wird noch 1 Stunde bei Raumtemperatur (20-23°C) nachgerührt. Der pH-Wert der Lösung beträgt 3,85. Dann werden 235,7 g Citronensäure Monohydrat gelöst in 195,2 g Wasser zugegeben und 15 Minuten verrührt. Die Konzentration wird durch Zugabe von 70,0 g Wasser eingestellt. Man erhält 8674,4 g einer klaren 39,8 %igen Lösung mit einem pH-Wert von 2,97.

Diese Lösung der oben beschriebenen Carbamoylsulfonatgruppen-haltigen Verbindung wird mit Hilfe einer Schlauchpumpe mit einer Dosiergeschwindigkeit von 89,2 ml pro Minute in einen Sprühtrockner mit Düsenzerstäuber gepumpt wird, wobei ein Luftdruck von 2,5 bis 3,0 bar eingestellt wurde. Die Eintrittstemperatur des Sprühtrockners wurde dabei zwischen 126 und 143°C eingestellt. Die Ausgangstemperatur betrug zwischen 40 und 70°C. Anbackungen im Trockner wurden nicht beobachtet. Es wurde ein weißes feinteiliges Pulver mit einer Schüttdichte von 356 g pro 1000 cm³ erhalten, das einen Trockenrückstand von 82,26% (Mettler IR-Trockner HR 73 P, 120°C, Standardtrocknung, bis Gewichtskonstanz) aufwies. Anschließend wurde das erhaltene Material bei 40°C und 50 mbar in einem Trockenschrank bis zur Gewichtskonstanz getrocknet. Der Trockenrückstand beträgt 99,13%. Das erhaltene staubarme Produkt hatte eine Teilchengrößenverteilung von 0,1 µm bis 150 µm und löst sich in Wasser sehr rasch auf, ohne zu verklumpen. Eine Lösung von 5 g Pulver in 50 ml Wasser ist klar und hat einen pH-Wert von 4,80. In einem anderen Sprühtrockner mit Zentrifugalzerstäuber wurde ohne Nachtrocknung bei einer Eintrittstemperatur von max. 130°C und einer Ausgangstemperatur von max. 80°C ebenfalls ein weißes Produkt erhalten. Das erhaltene staubarme Pulver hatte eine Teilchengrößenverteilung von 5 µm bis 200 µm, eine Restfeuchte von kleiner 1% und löst sich in Wasser sehr rasch auf, ohne zu verklumpen.
Der Trockenrückstand des Produkts ergab sich in diesem Fall zu 99,27% (Mettler IR-Trockner HR 73 P, 120°C, Standardtrocknung, bis zur Gewichtskonstanz). Eine Lösung von 5 g Pulver in 50 ml Wasser ist klar und hat einen pH-Wert von 4,94.

### Beispiel A9

### (7,1% Komp. b), bezogen auf HDI) (Konzentration: 35 %, Bisulfit:NCO = 1,05:1)

Zu einer Lösung aus 42,6 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 1419,7 g Wasser und 2007,5 g Natriumbisulfitlösung (NaHSO₃, 38-40% in Wasser) werden bei 25°C und einem pH-Wert von 3,84 unter Rühren 602,4 g Hexamethylendiisocyanat zugegeben. Dann wird die Temperatur der Reaktionsmischung innerhalb von 42 Minuten auf 50°C eingestellt. Der pH-Wert beträgt 5,04. Dann werden 34,0 g Citronensäure Monohydrat gelöst in 28,1 g Wasser zugegeben.

Es wird noch 1 Stunde bei 50°C nachgerührt, wobei das Reaktionsgemisch klar wird. Dann wird innerhalb von 2 Stunden auf 25°C abgekühlt. Es wird noch 1 Stunde bei Raumtemperatur (20-23°C) nachgerührt. Der pH-Wert der Lösung beträgt 4,55. Dann werden 102,5 g Citronensäure Monohydrat gelöst in 84,9 g Wasser zugegeben und 15 Minuten verrührt. Die Konzentration wird durch Zugabe von 70,0 g Wasser eingestellt. Man erhält 4391,7 g einer klaren 35 %igen Lösung mit einem pH-Wert von 2,96.

Als Entstaubungsmittel wurden 12,3 g eines Polyethers, der durch Alkoxylierung von 1,4-Bis(2-hydroxyethoxy)benzol mit 1 bis 2 mol Ethylenoxid und anschließend mit 6 mol Propylenoxid erhalten wurde, wurden in 3500 g der oben beschriebenen wässrigen Lösung der Carbamoylsulfonatgruppen-haltigen Verbindung gelöst und mit Hilfe einer Schlauchpumpe mit einer Dosiergeschwindigkeit von 97,8 ml pro Minute in einen Sprühtrockner mit Düsenzerstäuber gepumpt wird, wobei an der Düse ein Luftdruck von 3,0 bar eingestellt wurde. Die Einlasstemperatur des Sprühtrockners wurde dabei zwischen 129 und 133°C eingestellt. Die Ausgangstemperatur betrug zwischen 45 und 70°C. Anbackungen im Trockner wurden nicht beobachtet. Es wurde ein weißes feinteiliges Pulver mit einer Schüttdichte von 370 g pro 1000 mL erhalten, das einen Trockenrückstand von 93,46% (Mettler IR-Trockner HR 73 P, 120°C, Standardtrocknung, bis Gewichtskonstanz) aufwies. Anschließend wurde das erhaltene Material bei 40°C und 50 mbar in einem Trockenschrank bis zur Gewichtskonstanz getrocknet (Restfeuchte kleiner 1%). Das erhaltene staubarme Produkt hatte eine Teilchengröße von 1 µm bis 300 µm und löst sich in Wasser sehr rasch auf, ohne zu verklumpen. Eine Lösung von 5 g Pulver in 50 ml Wasser hatte einen pH-Wert von 4,13.

### Beispiel A10

### (7,1% Komp. b), bezogen auf HDI) (Konzentration: 35 %, Bisulfit:NCO = 1,05:1)

Zu einer Lösung aus 49,0 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 1632,7 g Wasser und 2308,6 g Natriumbisulfitlösung (NaHSO₃, 38-40% in Wasser) werden bei 25°C und einem pH-Wert von 3,93 unter Rühren 692,8 g Hexamethylendiisocyanat zugegeben. Dann wird die Temperatur der Reaktionsmischung innerhalb von 42 Minuten auf 50°C eingestellt. Der pH-Wert beträgt 5,28. Dann werden 39,1 g Citronensäure Monohydrat gelöst in 32,4 g Wasser zugegeben.

Es wird noch 1 Stunde bei 50°C nachgerührt, wobei das Reaktionsgemisch klar wird. Dann wird innerhalb von 2 Stunden auf 25°C abgekühlt. Es wird noch 1 Stunde bei Raumtemperatur (20-23°C) nachgerührt. Der pH-Wert der Lösung beträgt 4,60. Dann werden 117,9 g Citronensäure Monohydrat gelöst in 97,6 g Wasser zugegeben und 15 Minuten verrührt. Die Konzentration wird durch Zugabe von 50,0 g Wasser eingestellt. Man erhält 4980,7 g einer klaren 34,92 %-igen Lösung mit einem pH-Wert von 3,06.

3500 g dieser Lösung der oben beschriebenen Carbamoylsulfonatgruppen-haltigen Verbindung wurden mit 12,3 g eines Mineralöl-basierten wasserdispergierbaren Entstaubungsmittels verrührt und mit Hilfe einer Schlauchpumpe mit einer Dosiergeschwindigkeit von 114,2 ml pro Minute in einen Sprühtrockner mit Düsenzerstäuber gepumpt, wobei an der Düse ein Luftdruck von 3,0 bar eingestellt wurde. Die Einlaßtemperatur des Sprühtrockners wurde dabei zwischen 130 und 133°C eingestellt. Die Ausgangstemperatur betrug zwischen 50 und 89°C. Anbackungen im Trockner wurden nicht beobachtet. Es wurde ein weißes feinteiliges Pulver mit einer Schüttdichte von 380 g pro 1000 mL erhalten, das einen Trockenrückstand von 97,60% (Mettler IR-Trockner HR 73 P, 120°C, Standardtrocknung, bis Gewichtskonstanz) aufwies. Anschließend wurde das erhaltene Material bei 40°C und 50 mbar in einem Trockenschrank bis zur Gewichtskonstanz getrocknet (Restfeuchte kleiner 1%). Das erhaltene staubarme Produkt hatte eine Teilchengröße von 1 µm bis 250 µm und löst sich in Wasser sehr rasch auf, ohne zu verklumpen. Eine Lösung von 5 g Pulver in 50 ml Wasser hatte einen pH-Wert von 4,14.

### Beispiel A11

### (Einsatz 7,1 % Emulgator, bezogen auf Diisocyanat, Molverhältnis Bisulfit : NCO = 1 : 1)

Zu einer Lösung aus 17,2 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 441,7 g Wasser und 800,0 g Natriumbisulfitlösung (NaHSO₃, 38-40% in Wasser) werden bei 20°C 290,7 g Bis(isocyanatomethyl)cyclohexan (Isomerengemisch, überwiegend 1,4-Isomer) unter Rühren zudosiert und die Temperatur der Reaktionsmischung innerhalb von 60 Minuten auf 50°C erhöht. Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Man erhält eine klare Lösung mit einem Festgehalt von 40,0% und einem pH-Wert von 5,93.

Zu dieser Lösung werden bei Raumtemperatur 3000 ml Aceton zugegeben. Man rührt 2 Stunden nach, wobei gleichzeitig auf 17 °C abgekühlt wird. Der ausgefallene weisse Feststoff wird abgesaugt, mit Aceton gewaschen und im Vakuum bei 20°C bis zur Gewichtskonstanz getrocknet (isolierte Ausbeute 63,7%, Restfeuchte kleiner 1%).

### Beispiel A12

### (Einsatz 7,1 % Emulgator, bezogen auf Diisocyanat, Molverhältnis Bisulfit : NCO = 1,05 : 1)

Zu einer Lösung aus 19,8 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 653,0 g Wasser und 923,4 g Natriumbisulfitlösung (NaHSO₃, 38-40% in Wasser) werden bei 20°C 320,2 g Bis(isocyanatomethyl)cyclohexan (Isomerengemisch, überwiegend 1,3-Isomer) unter Rühren zudosiert und die Temperatur der Reaktionsmischung iinerhalb von 70 Minuten bis 50°C erhöht. Der pH-Wert beträgt 5,08. Es wird eine Lösung von 15,6 g Citronensäure Monohydrat in 15,6 g Wasser zugegeben und noch 1,5 Stunden bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert beträgt 4,78. Dann werden 47,2 g Citronensäure, gelöst in 47,2 g Wasser, und noch 15 Minuten verrührt. Zur Einstellung der Konzentration werden 122,4 g Wasser zugegeben. Man erhält eine klare Lösung mit einem Festgehalt von 35,1% und einem pH-Wert von 2,95.

Die Lösung wird zunächst bei 20°C, dann bei 40-50°C und 50 mbar im Trockenschrank bis zur Gewichtskonstanz getrocknet. Man erhält eine isolierte Ausbeute von 720,1 g eines weißen Feststoffs. Der Trockenrückstand des Produkts wurde mit 99,7% ermittelt (Mettler IR-Trockner HR 73 P, 120°C, Standardtrocknung, bis zur Gewichtskonstanz, Restfeichte kleiner 1%). Eine Lösung von 17,5 g Pulver in 50 ml Wasser ist klar und hat einen pH-Wert von 2,97.

### Beispiel A13

### (7,1% Komp. b), bezogen auf HDI) (Dosierung von HDI bei 80°C, Bisulfit: NCO = 1,05:1)

Zu einer Lösung aus 5,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 195,9 g Wasser und 277,0 g Natriumbisulfitlösung (NaHSO₃, 38-40% in Wasser) werden bei 80°C 83,1 g Hexamethylendiisocyanat unter Rühren in einer Portion zugegeben und gekühlt. Nach 5 Minuten ist eine Temperatur 85°C erreicht. Dann werden 4,7 g Citronensäure Monohydrat gelöst in 3,9 g Wasser zugegeben, wobei der pH-Wert des Reaktionsgemisches 5,77 beträgt. Nach weiteren 5 Minuten ist eine Temperatur von 90°C erreicht (pH 5,83). Dann wird der Ansatz innerhalb von 75 Minuten auf 25°C abgekühlt, wobei während der Abkühlphase eine klare Lösung entsteht. Der pH-Wert der Lösung beträgt bei Raumtemperatur 6,29. Es werden 18,8 g Citronensäure Monohydrat gelöst in 16,4 g Wasser zugegeben und die Konzentration durch Zugabe von 33,0 g Wasser eingestellt. Man erhält eine klare 34,0 %-ige Lösung mit pH 3,09.

Zu dieser Lösung werden bei Raumtemperatur 1500 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (isolierte Ausbeute 87%, Restfeuchte kleiner 1%).

### Beispiel A14

### (7,1% Komp. b), bezogen auf HDI) (Dosierung von HDI bei 60°C, Bisulfit: NCO = 1,05:1)

Zu einer Lösung aus 5,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 195,9 g Wasser und 277,0 g Natriumbisulfitlösung (NaHSO₃, 38-40% in Wasser) werden bei 60°C 83,1 g Hexamethylen-diisocyanat unter Rühren in einer Portion zugegeben und gekühlt. Nach 8 Minuten ist eine Temperatur 70°C erreicht. Dann werden 4,7 g Citronensäure Monohydrat gelöst in 3,9 g Wasser zugegeben, wobei der pH-Wert des Reaktionsgemisches 4,90 beträgt. Es wird noch 20 Minuten bei 70°C nachgerührt, wobei eine fast klare Lösung entsteht. Dann wird der Ansatz in 60 Minuten auf 25°C abgekühlt. Der pH-Wert der klaren Lösung beträgt bei Raumtemperatur 5,38. Es werden 14,1 g Citronensäure Monohydrat gelöst in 11,7 g Wasser zugegeben und die Konzentration durch Zugabe von 4,8 g Wasser eingestellt. Man erhält eine klare 34,7 %-ige Lösung mit pH 3,30.
Zu dieser Lösung werden bei Raumtemperatur 1500 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (isolierte Ausbeute 90%, Restfeuchte kleiner 1%).

### Beispiel A15

### (7,1% Komp. b), bezogen auf HDI) (Dosierung von HDI bei 50°C, Bisulfit: NCO = 1,05:1)

Zu einer Lösung aus 5,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 195,9 g Wasser und 277,0 g Natriumbisulfitlösung (NaHSO₃, 38-40% in Wasser) werden bei 50°C 83,1 g Hexamethylendiisocyanat unter Rühren in einer Portion zugegeben und gekühlt. Nach 8 Minuten ist eine Temperatur 63°C erreicht. Dann werden 4,7 g Citronensäure Monohydrat gelöst in 3,9 g Wasser zugegeben, wobei der pH-Wert des Reaktionsgemisches 3,79 beträgt. Es wird noch 1 Stunde bei 60°C nachgerührt, wobei bereits nach 15 Minuten eine klare Lösung resultiert. Dann wird der Ansatz in 60 Minuten auf 25°C abgekühlt. Der pH-Wert der klaren Lösung beträgt bei Raumtemperatur 4,61. Es werden 14,1 g Citronensäure Monohydrat gelöst in 11,7 g Wasser zugegeben. Man erhält eine klare 35,5 %-ige Lösung mit einem pH-Wert von 2,88. Zu dieser Lösung werden bei Raumtemperatur 1500 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (isolierte Ausbeute 88,5 %, Restfeuchte kleiner 1%).

### Beispiel A16

### (7,1% Komp. b), bezogen auf HDI) (Mikroreaktor 60°C, Bisulfit: NCO = 1,00 : 1)

Es wird ein Modulares Mikroreaktionssystem der Firma Ehrfeld BTS GmbH verwendet. Auf einer Arbeitsplatte werden als folgende wesentliche Module (Material: Hastelloy) miteinander dicht verschraubt: 2 Einlassmodule, 2 Drucksensoren, 1 Kaskadenmischer, 1 Wärmetauscher, 1 T-Sensor, 1 Überdruckventil, 1 Isoliermodul, 1 Sandwich-Reaktor, 1 Isoliermodul, 1 Wärmetauscher zum Kühlen, 1 T-Sensor, 1 Durchflussmesser, 1 Auslassmodul.

Es wird eine Lösung aus 59 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), 1959 g Wasser und 2770 g Natriumbisulfitlösung (NaHSO₃, frisch hergestellt, 39% in Wasser) hergestellt und in einen Vorratsbehälter gefüllt. Aus einem zweiten Vorratsbehälter werden 831 g Hexamethylen-diisocyanat vorgelegt.

Mit Hilfe von Mikrozahnringpumpen wird die Dosierung in das System vorgenommen. Di entsprechenden Mengenströme werden bestimmt. Nach der Vorbereitung der Anlage werden die beiden Komponenten kontinuierlich und gleichzeitig in einem stöchiometrischen Verhältnis von 1,00 mol Bisulfit pro 1,00 mol NCO über Einlassmodule in den Mikromischer der Anlage gepumpt, wobei mittels Thermostaten der 1. Wärmetauscher auf 50°C, der Reaktor auf 70°C eingestellt werden und der 2. Wärmetauscher mit Wasser gekühlt wird. Die Dosiergeschwindigkeit der beiden Komponenten wurde so eingestellt, dass das Reaktionsgemisch als 35 %ige wässrige Lösung das Reaktionssystem mit einer Geschwindigkeit von 50 ml / Minute verlässt. Die Mischung war schon fast klar und hatte einen pH-Wert von 3,90. Die Konzentration der Carbamoylsulfonatgruppen-haltigen Verbindung wurde mittels HPLC anhand von Proben ermittelt, die direkt am Auslassmodul gezogen wurden. Die Konzentration wurde mit 32,5 % ermittelt. Nach einer Nachrührzeit von 15 Minuten in einem Verweiltank bei 20-23°C entsteht eine klare Lösung. Eine dem Verweiltank entnommene Probe hatte eine Konzentration von 34 % der Carbamoylsulfonatgruppen-haltigen Verbindung. Der pH-Wert der klaren Lösung beträgt 3,95.

Einer 100 ml-Probe der erhaltenen Lösung werden bei Raumtemperatur 300 ml Aceton zugegeben. Man rührt 5 Minuten nach. Der ausgefallene weiße Feststoff wird abgesaugt, mit Aceton gewaschen und im Vakuum bei 20°C bis zur Gewichtskonstanz getrocknet (isolierte Ausbeute 90,5 %, Restfeuchte kleiner 1 %).

Die übrige Lösung aus dem Verweiltank wird mit Zitronensäure auf einem pH-Wert von 3,00 gehalten und kontinuierlich in einen Sprühtrockner mit Düsenzerstäuber analog Beispiel A8 dosiert und bei einer Einlasstemperatur von 140°C sowie einer Auslasstemperatur von 80°C kontinuierlich getrocknet. Man erhält ein weißes Pulver mit einer Restfeuchte von 1,2 %.

### Beispiel A17: (7,1% Komp. b), bezogen auf HDI)

Zu einer Lösung aus 21 g Sorbitan-polyethylenglycol (20) monododecanoat (z.B. Eumulgin® SML 20 (Cognis) oder Tween® 20 (Croda)), das mit insgesamt 20 Ethylenoxid-Einheiten pro Sorbitan-Einheit alkoxyliert ist (HLB 16,7), in 1334 g Wasser und 351,6 g Natrium-Metabisulfit (Na₂S₂O₅) werden bei 23°C 296,4 g Hexamethylendiisocyanat unter Rühren in einer Portion zugegeben. Dann wird die Temperatur der Reaktionsmischung innerhalb von 30 Minuten auf 50°C erhöht. Zu diesem Zeitpunkt hat die Mischung einen pH-Wert von 5,53 erreicht.

Es wird noch 1 Stunde bei 50°C nachgerührt, wobei der pH-Wert in den ersten 30 Minuten noch bis 6,51 ansteigt und dann konstant bleibt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 6,39.

Der Ansatz wird nun geteilt:
1) 961,4 g Produkt werden mit 8,1 g Citronensäure Monohydrat (0,8 %) versetzt.
   Nach Filtration erhält man eine klare Lösung mit 34,8% Festgehalt und pH 3,60.
2) 1024,9 g Produkt werden mit 25,4 g Citronensäure Monohydrat (2,4%) versetzt.
   Nach Filtration erhält man eine klare Lösung mit 36,1% Festgehalt und pH 2,96.

Die erhaltene Lösungen wurde gemäß Beispiel A8 sprühgetrocknet und ergaben ebenfalls staubarme und rieselfähige Pulver mit einer Restfeuchte von kleiner 1%.

### Beispiel A18 (7,1% Komp. b), bezogen auf HDI)

In einer Lösung aus 2668 g Wasser und 703,2 g Natrium-Metabisulfit (Na₂S₂O₅) wurden 42,0 g Sorbitan-polyethylenglycol (20)-monododecanoat (z.B. Eumulgin® SML 20 (Cognis) oder Tween® 20 (Croda)), das mit insgesamt 20 Ethylenoxid-Einheiten pro Sorbitan-Einheit alkoxyliert ist (HLB 16,7) (= Komponente b1), gelöst. Bei 22°C wurden 592,8 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,72 erreicht.

Es werden 33,6 g Citronensäure Monohydrat gelöst in 100 g Wasser zugegeben, wobei ein pH-Wert von 3,72 resultiert.

Es wird noch 1 Stunde bei 50°C nachgerührt, wobei der pH-Wert in den ersten 30 Minuten noch bis 4,66 ansteigt und dann konstant bleibt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,67. Es werden 100,8 g Citronensäure Monohydrat in fester Form zugegeben und die Konzentration mit Wasser eingestellt.

Man erhält eine klare 35 %-ige Lösung mit pH 3,11.
Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A19: (6,1% Komp. b), bezogen auf IPDI)

Zu einer Lösung aus 15,7 g Sorbitan-polyethylenglycol (20)-monododecanoat (z.B. Eumulgin® SML 20 (Cognis) oder Tween® 20 (Croda)), das mit insgesamt 20 Ethylenoxid-Einheiten pro Sorbitan-Einheit alkoxyliert ist (HLB 16,7) (= Komponente b1), in 573,1 g Wasser und 646,4 g Natriumbisulfitlösung (NaHSO₃, 38-40% in Wasser) werden bei 20°C 256,4 g Isophorondiisocyanat unter Rühren in 5 Minuten zugegeben. Dann wird die Temperatur der Reaktionsmischung innerhalb von 90 Minuten auf 50°C erhöht. Zu diesem Zeitpunkt hat die Mischung einen pH-Wert von 5,90 erreicht.

Es wird noch 1,5 Stunden bei 50°C nachgerührt, wobei das Reaktionsgemisch nach 45 Minuten klar wird. Dann wird innerhalb von 1,5 Stunden auf 23°C abgekühlt. Es wird noch 4 Stunden bei Raumtemperatur (20-23°C) nachgerührt. Der pH-Wert der Lösung beträgt 5,65. Es werden 20,4 g Citronensäure Monohydrat gelöst in 20,4 g Wasser zugegeben und die Konzentration mit 18,7 g Wasser eingestellt. Man erhält eine klare 35 %-ige Lösung mit pH 2,80.

Die erhaltene Lösung wurde gemäß Beispiel A6 isoliert isoliert und besaß eine Restfeuchte von kleiner 1%.

### Beispiel A20: (7,1% Komp. b), bezogen auf HDI)

Zu einer Lösung aus 97,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 3265,3 g Wasser und 4617,2 g Natriumbisulfitlösung (NaHSO₃, 38-40% in Wasser) werden bei 20°C 1385,6 g Hexamethylendiisocyanat unter Rühren in 5 Minuten zugegeben. Dann wird die Temperatur der Reaktionsmischung innerhalb von 30 Minuten auf 50°C erhöht. Dann werden 78,1 g Citronensäure Monohydrat gelöst in 64,7 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,84. Dann werden 235,7 g Citronensäure Monohydrat gelöst in 195,2 g Wasser zugegeben und die Konzentration durch Zugabe von 264,2 g Wasser eingestellt. Man erhält eine klare 35,2 %-ige Lösung mit pH 2,68.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A21: (7,1% Komp. b), bezogen auf HDI)

Zu einer Lösung aus 10,5 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 550,0 g Wasser und 184,2 g Natrium-Metabisulfit (Na₂S₂O₅) werden 1,2 g Citronensäure-Monohydrat gegeben. Dann werden bei 23°C 148,2 g Hexamethylendiisocyanat unter Rühren in einer Portion zugegeben. Sofort anschließend wird eine Lösung aus 58,3 g Citronensäure Monohydrat gelöst in 99,2 g Wasser zudosiert, wobei ein pH-Wert von zwischen 3,0 und 4,0 gehalten wird. Direkt nach Zugabe des Isocyanats wird gleichzeitig die Temperatur der Reaktionsmischung innerhalb von 50 Minuten auf 50°C erhöht. Es wird 1 Stunde bei 50°C nachgerührt. Das Reaktionsgemisch wird klar und hat einen pH-Wert von 3,55. Abschließend werden 169,0 g Wasser zugegeben. Man erhält eine klare 33,7 %ige Lösung mit pH-Wert 3,24.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A22: (7,14% Komp. b), bezogen auf HDI)

Zu einer Lösung aus 9,9 g Sorbitan-polyethylenglycol (20)-monooleat (z.B. Tween 80, Croda), das mit insgesamt 20 Ethylenoxid-Einheiten pro Sorbitan-Einheit alkoxyliert (HLB 15,0) ist (= Komponente b1), in 326,5 g Wasser und 461,7 g Natriumbisulfit-Lösung (NaHSO₃, 38-40% in Wasser) werden bei 24°C 138,6 g Hexamethylendiisocyanat unter Rühren in einer Portion zugegeben. Dann wird die Temperatur der Reaktionsmischung innerhalb von 30 Minuten auf 50°C erhöht. Zu diesem Zeitpunkt hat die Mischung einen pH-Wert von 5,23 erreicht.

Es werden 7,8 g Citronensäure Monohydrat, gelöst in 7,8 g Wasser, zugegeben, wobei ein pH-Wert von 3,45 resultiert. Es wird noch 1 Stunde bei 50°C nachgerührt, wobei der pH-Wert in den ersten 30 Minuten noch bis 4,28 ansteigt und dann konstant bleibt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,14. Es werden 23,6 g Citronensäure Monohydrat, gelöst in 23,6 g Wasser, zugegeben und die Konzentration mit 20,0 g Wasser eingestellt. Man erhält eine klare 35 %-ige Lösung mit pH 3,05.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A23: (7,14% Komp. b), bezogen auf HDI)

Zu einer Lösung aus 9,9 g Sorbitan-polyethylenglycol (20)-monohexadecanoat (z.B. Tween 40, Croda), das mit insgesamt 20 Ethylenoxid-Einheiten pro Sorbitan-Einheit alkoxyliert ist (HLB 15,6) (= Komponente b1), in 326,5 g Wasser und 461,7 g Natriumbisulfit-Lösung (NaHSO₃, 38-40% in Wasser) werden bei 21°C 138,6 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,51 erreicht.

Es werden 7,8g Citronensäure Monohydrat, gelöst in 7,8 g Wasser zugegeben, wobei ein pH-Wert von 3,56 resultiert.

Es wird noch 1 Stunde bei 50°C nachgerührt, wobei der pH-Wert in den ersten 30 Minuten noch bis 4,35 ansteigt und dann konstant bleibt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,25. Es werden 23,6 g Citronensäure Monohydrat gelöst in 23,6 g Wasser zugegeben und die Konzentration mit 20,0 g Wasser eingestellt. Man erhält eine klare 34,9 %ige Lösung mit pH 2,58.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A24: (6,18 % Komp. b), bezogen auf CHMDI)

Zu einer Lösung aus 9,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), in 326,5 g Wasser und 461,7 g Natriumbisulfit-Lösung (NaHSO₃, 38-40% in Wasser) werden bei 20°C 160,1 g 1,3-Bis (isocyanatomethyl) cyclohexan (Aldrich) unter Rühren hinzugefügt. Dann wird die Temperatur der Reaktionsmischung innerhalb von 30 Minuten auf 50°C erhöht. Zu diesem Zeitpunkt hat die Mischung einen pH-Wert von 3,97 erreicht.

Es werden 7,8 g Citronensäure Monohydrat gelöst in 7,8 g Wasser zugegeben, wobei ein pH-Wert von 3,23 resultiert. Es wird noch 1,75 Stunden bei 50°C nachgerührt, wobei der pH-Wert in den ersten 60 Minuten noch bis 4,29 ansteigt und dann konstant bleibt. Das Reaktionsgemisch ist dann klar und wird innerhalb von 2 Stunden auf 20°C abgekühlt. Es wird noch 2 Stunden bei Raumtemperatur (20-23°C) nachgerührt. Der pH-Wert der Lösung beträgt 4,07. Es werden 23,6 g Citronensäure Monohydrat gelöst in 23,6 g Wasser zugegeben und die Konzentration mit 61,2 g Wasser eingestellt. Man erhält eine klare 35,0 %ige Lösung mit pH 2,60.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A25: (7,07 % Komp. b), bezogen auf HDI)

Zu einer Lösung aus 9,8 g Sorbitan-polyethylenglycol (20)-monooctadecanoat (z.B. Eumulgin SMS 20 (Cognis) oder Tween 60 (Croda)), das mit insgesamt 20 Ethylenoxid-Einheiten pro Sorbitan-Einheit alkoxyliert ist (HLB 14,9) (= Komponente b1), in 326,5 g Wasser und 461,7 g Natriumbisulfit-Lösung (NaHSO₃, 38-40% in Wasser) werden bei 24°C 138,6 g Hexamethylendiisocyanat unter Rühren hinzugefügt. Dann wird die Temperatur der Reaktionsmischung innerhalb von 28 Minuten auf 50°C erhöht. Zu diesem Zeitpunkt hat die Mischung einen pH-Wert von 5,28 erreicht.

Es werden 7,8 g Citronensäure Monohydrat gelöst in 6,5 g Wasser zugegeben, wobei ein pH-Wert von 3,11 resultiert. Es wird noch 1 Stunde bei 50°C nachgerührt, wobei der pH-Wert in den ersten 30 Minuten noch bis 3,22 ansteigt und dann konstant bleibt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 2,80. Es werden 23,6 g Citronensäure Monohydrat gelöst in 23,6 g Wasser zugegeben und die Konzentration mit 20,0 g Wasser eingestellt. Man erhält eine leicht trübe 34,9 %-ige Lösung mit pH 2,38.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A26: (7,12 % Komp. b), bezogen auf HDI)

Zu einer Lösung aus 15,8 g C8-C10 Alkylglucosid (DP 1,6) (62,5 % in Wasser) (z.B. Glucopon 215 UP, Cognis) (= Komponente b2), in 320 g Wasser und 461,7 g Natriumbisulfit-Lösung (NaHSO₃, 38-40% in Wasser) werden bei 22°C 138,6 g Hexamethylendiisocyanat unter Rühren in einer Portion zugegeben. Dann wird die Temperatur der Reaktionsmischung innerhalb von 45 Minuten auf 50°C erhöht. Zu diesem Zeitpunkt hat die Mischung einen pH-Wert von 5,27 erreicht.

Es werden 7,8 g Citronensäure Monohydrat, gelöst in 7,8 g Wasser zugegeben, wobei ein pH-Wert von 3,86 resultiert.

Es wird noch 1 Stunde bei 50°C nachgerührt, wobei der pH-Wert bis 4,95 ansteigt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,84. Es werden 45,8 g Citronensäure Monohydrat gelöst in 45,8 g Wasser zugegeben und die Konzentration mit 21,8 g Wasser eingestellt. Man erhält eine klare 35,6 %-ige Lösung mit pH 2,80.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A27: (7,14 % Komp. b) bezogen auf HDI)

Zu einer Lösung aus 19,4 g C12-C16 Alkylglucosid (DP 1,4) (51% in Wasser) (z.B. Glucopon 600 CS UP, Cognis) (= Komponente b2), in 317 g Wasser und 461,7 g Natriumbisulfit-Lösung (NaHSO3, 38-40% in Wasser) werden bei 22°C 138,6 g Hexamethylendiisocyanat unter Rühren in einer Portion zugegeben. Dann wird die Temperatur der Reaktionsmischung innerhalb von 55 Minuten auf 50°C erhöht. Zu diesem Zeitpunkt hat die Mischung einen pH-Wert von 5,04 erreicht.

Es werden 7,8 g Citronensäure Monohydrat, gelöst in 7,8 g Wasser zugegeben, wobei ein pH-Wert von 3,87 resultiert.

Es wird noch 1 Stunde bei 50°C nachgerührt, wobei der pH-Wert bis 5,04 ansteigt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 5,01. Es werden 30,4 g Citronensäure Monohydrat gelöst in 23,6 g Wasser zugegeben und die Konzentration mit 6,8 g Wasser eingestellt. Man erhält eine transparente, fast klare 35,4 %ige Lösung mit pH 3,07.

Die erhaltene Lösung wurde gemäß Beispiel A8 sprühgetrocknet und ergab ebenfalls ein staubarmes und rieselfähiges Pulver mit einer Restfeuchte von kleiner 1 %.

### Beispiel A28: (7,14% Komp. b), bezogen auf HDI)

Zu einer Lösung aus 9,9 g hydriertes Ricinusöl-Ethoxylat (z.B. Eumulgin HRE 40, Cognis), das mit insgesamt 40 Ethylenoxid-Einheiten alkoxyliert ist (HLB 14,0) (= Komponente b1), in 326,5 g Wasser und 461,7 g Natriumbisulfit-Lösung (NaHSO₃, 38-40% in Wasser) werden bei 20°C 138,6 g Hexamethylendiisocyanat unter Rühren in einer Portion zugegeben. Dann wird die Temperatur der Reaktionsmischung innerhalb von 45 Minuten auf 50°C erhöht. Zu diesem Zeitpunkt hat die Mischung einen pH-Wert von 6,01 erreicht.

Es werden 7,8 g Citronensäure Monohydrat, gelöst in 7,8 g Wasser zugegeben, wobei ein pH-Wert von 3,80 resultiert.

Es wird noch 1 Stunde bei 50°C nachgerührt, wobei der pH-Wert bis 4,30 ansteigt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,18. Es werden 23,6 g Citronensäure Monohydrat gelöst in 23,6 g Wasser zugegeben und die Konzentration mit 15,0 g Wasser eingestellt. Man erhält eine klare 35,0 %ige Lösung mit pH 3,02.

Die erhaltene Lösung wurde gemäß Beispiel A8 sprühgetrocknet und ergab ebenfalls ein staubarmes und rieselfähiges Pulver mit einer Restfeuchte von kleiner 1 %.

### Beispiel A29: (7,1% Komp. b), bezogen auf HDI)

Zu einer Lösung aus 9,9 g Polyoxyethylen (20)-glycerin monostearat (z.B. Cutina® E24, Cognis), das mit insgesamt 20 Ethylenoxid-Einheiten pro Glycerin-Einheit alkoxyliert ist (HLB 13,5) (= Komponente b1), in 326,5 g Wasser und 461,7 g Natriumbisulfit-Lösung (NaHSO₃, 38-40% in Wasser) werden bei 22°C 138,6 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,67 erreicht.

Es werden 7,8 g Citronensäure Monohydrat, gelöst in 7,8 g Wasser zugegeben, wobei ein pH-Wert von 3,80 resultiert.

Es wird noch 1 Stunde bei 50°C nachgerührt, wobei der pH-Wert bis 4,79 ansteigt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,69. Es werden 33,6 g Citronensäure Monohydrat gelöst in 33,6 g Wasser zugegeben und die Konzentration mit 15,0 g Wasser eingestellt. Man erhält eine transparente, fast klare 35,2 %-ige Lösung mit pH 2,82.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A30: (7,1% Komp. b), bezogen auf HDI)

Zu einer Lösung aus 9,8 g Sorbitan-polyethylenglycol (30)-monododecanoat, das mit insgesamt 30 Ethylenoxid-Einheiten pro Sorbitan-Einheit alkoxyliert ist (HLB 17,6) (= Komponente b1), in 326,5 g Wasser und 461,7 g Natriumbisulfitlösung (NaHSO₃, 38-40% in Wasser) werden bei 20°C 138,6 g Hexamethylendiisocyanat unter Rühren in 5 Minuten zugegeben. Dann wird die Temperatur der Reaktionsmischung innerhalb von 30 Minuten auf 50°C erhöht. Dann werden 7,8 g Citronensäure Monohydrat gelöst in 6,5 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,91. Dann werden 23,6 g Citronensäure Monohydrat gelöst in 19,5 g Wasser zugegeben und die Konzentration durch Zugabe von 26,4 g Wasser eingestellt. Man erhält eine klare 35,2 %ige Lösung mit pH 2,75.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A31: (7,1% Komp. b), bezogen auf HDI)

Zu einer Lösung aus 9,8 g Sorbitan-polyethylenglycol (15)-monododecanoat, das mit insgesamt 15 Ethylenoxid-Einheiten pro Sorbitan-Einheit alkoxyliert ist (HLB 16,0) (= Komponente b1), in 326,5 g Wasser und 461,7 g Natriumbisulfitlösung (NaHSO₃, 38-40% in Wasser) werden bei 20°C 138,6 g Hexamethylendiisocyanat unter Rühren in 5 Minuten zugegeben. Dann wird die Temperatur der Reaktionsmischung innerhalb von 30 Minuten auf 50°C erhöht. Dann werden 7,8 g Citronensäure Monohydrat gelöst in 6,5 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,85. Dann werden 23,6 g Citronensäure Monohydrat gelöst in 19,5 g Wasser zugegeben und die Konzentration durch Zugabe von 26,4 g Wasser eingestellt. Man erhält eine klare 35,2 %-ge Lösung mit pH 2,80.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A32: (7,1%Komp. b), bezogen auf HDI)

In einer Lösung aus 1334,0 g Wasser und 351,6 g Natrium-Metabisulfit (Na₂S₂O₅) wurden 21,0 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), gelöst. Bei 40°C wurden 296,4 g Hexamethylendiisocyanat unter Rühren in einer Portion zugegeben. Nach 10 Minuten sind 50°C erreicht. Zu diesem Zeitpunkt hat die Mischung einen pH-Wert von 4,89 erreicht. Es wird noch 1 Stunde bei 50°C nachgerührt, wobei der pH-Wert innerhalb von 20 Minuten noch bis 6,30 ansteigt und dann konstant bleibt. Das Reaktionsgemisch ist leicht trüb und wird innerhalb von 2 Stunden auf 20°C abgekühlt. Es wird noch 2 Stunden bei Raumtemperatur (20-23°C) nachgerührt. Der pH-Wert der Lösung beträgt 6,12. Es werden 48,1 g Citronensäure Monohydrat in fester Form zugegeben und die Konzentration mit Wasser eingestellt. Nach Filtration erhält man eine klare 35 %ige Lösung mit pH 2,95.

Die erhaltene Lösung wurde gemäß Beispiel A8 sprühgetrocknet und ergab ebenfalls ein staubarmes und rieselfähiges Pulver mit einer Restfeuchte von kleiner 1%.

### Beispiel A33: (17,4% Komp. b) bezogen auf HDI)

In einer Lösung aus 3700,0 g Wasser und 1013,1 g Natrium-Metabisulfit (Na₂S₂O₅) wurden 142,0 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7) (= Komponente b1), gelöst. Beginnend bei 22°C wurden innerhalb von 2 Stunden 815,3 g Hexamethylendiisocyanat unter Rühren zudosiert. Nach weiteren 30 Minuten hat die Mischung einen pH-Wert von 5,77 und 32°C erreicht. Dann wird noch 5,5 Stunden unter leichter Kühlung bei einer Temperatur bei 20 bis 30°C nachgerührt, wobei der pH-Wert auf 5,68 fällt. Das Reaktionsgemisch ist trüb und wird über Nacht stehen gelassen. Zu der noch schwach trüben Lösung werden 46,2 g Citronensäure Monohydrat und 300 g Wasser zugegeben. Nach Filtration erhält man eine klare 34,5 %ige Lösung mit pH 3,35. Die erhaltene Lösung wurde gemäß Beispiel A8 sprühgetrocknet und ergab ebenfalls ein staubarmes und rieselfähiges Pulver mit einer Restfeuchte von kleiner 1%.

### B) Verwendungsbeispiele (Gerbungen)

Die Einsatzmengen der jeweils eingesetzten Produkte (z.B. Handelsprodukte in der Lieferform) beziehen sich auf das Gewicht der eingesetzten Rohware bzw. der Zwischenprodukte.

### B 1: medizinisches Schafsfell, chromfrei

In einer betriebsüblichen Haspel werden luftgetrocknete Schafsfelle mit 20 1 Wasser pro Fell und 2,0 g/l eines nichtionischen Emulgators auf Basis eines Fettalkohol-ethoxylats bei 25 °C über Nacht rückgeweicht und anschließend entfleischt. Die so vorbereiteten Felle werden bei 35 °C zweimal in wässriger Flotte mit 2,0 g/l eines nichtionischen Emulgators auf Basis eines Fettalkohol-ethoxylats für jeweils 60 min. entfettet und nach Ablassen der Flotte mit warmem Wasser gründlich gespült.

Zur Vorbereitung der Gerbung wird neue Flotte vorgelegt und ohne Pickel bei 25 °C mit 5,3 g/l erfindungsgemäßem Produkt aus Beispiel A 1 versetzt. Durch Zugabe von Magnesiumoxid in drei Dosen wird der pH schrittweise auf 8,8 erhöht und dann die Temperatur auf 40 °C angehoben. Nach 12 h Laufzeit werden ins gleiche Bad 7 g/l sulfatiertes synthetisches Fettungsmittel und 2,0g/l Lecithin-basiertes Dispergierhilfsmittel gegeben. Nach 2 h wird mit Ameisensäure der pH auf 5,5 reduziert. Nach Ablassen der Flotte wird mit kaltem Wasser gründlich nachgewaschen und die Felle handelsüblich fertig gestellt und weisen eine Schrumpftemperatur von 77 °C auf.

Gegenüber handelsüblich mit Glutardialdehyd gegerbten Fellen weisen die erfindungsgemäßen Felle eine deutlich hellere Farbe sowohl des Leders wie auch der Wolle und eine bessere Lichtechtheit auf. Im Aldehyd-Test DIN 53315 A sind die Messwerte gegenüber dem Stand der Technik deutlich reduziert und liegen unter der Nachweisgrenze der Methode von 20 ppm.

Ebenfalls gute Ergebnisse wurden auch mit den Pulvern aus den Beispielen A2 bis A33 erhalten.

Die Einsatzmengen werden in diesen Beispielen beibehalten.

### B 2: Herstellung von Wet White für vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50% Wasser und 1 % eines Beizenzyms (Novobate 1547, Produkt von Novozyme) zugegeben und für 1 Stunde bewegt. Anschließend wird die Flotte abgelassen und die Blösse erneut gewaschen.

In 50 % frischer Flotte wird die Blösse 1 Stunde mit 0,25% Magnesiumoxid auf pH 9,5 konditioniert und mit 2,8 % des erfindungsgemäßen Produktes aus Beispiel A3 versetzt (als Pulver oder mit Wasser 1:1 verdünnt) versetzt (pH 8,3). Nach 3 Stunden wird durch Zugabe von 0,3 % Magnesiumoxid der pH der Flotte auf 9,0 bis 9,5 angehoben und die Schrumpftemperatur gemessen. Nach einer Laufzeit von 1 Stunde werden 0,2 % Magnesiumoxid und 0,1% einer wässrigen Ammoniak-Lösung (mit Wasser 1:5 verdünnt) zugegeben (nach 1 Stunde beträgt der pH 9,1) und das Fass bei 35 °C über Nacht bewegt (pH 9,2).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder (Chromfrei gegerbtes Leder-Zwischenprodukt zur mechanischen Behandlung und weiteren (Nach-)Gerbung) werden gewaschen und abgewelkt. Die Schrumpftemperatur wird erneut gemessen (77°C) und die Leder auf 1,0 mm gefalzt

Hinsichtlich der Eigenschaften wurde ein Leder mit einer Schrumpftemperatur von 77 °C, einem glatten Narbenbild, einem trocken, festen Griff, sowie einer sehr guten Abwelkbarkeit und Falzbarkeit erhalten. Ebenfalls gute Ergebnisse wurden auch mit den Pulvern aus den Beispielen A1, A2 und A4 bis A33 erhalten. Die Schrumpftemperatur lag jeweils oberhalb von 70 °C, das Narbenbild war jeweils glatt, die Leder haben einen trockenen, festen Griff und ein gute bis sehr gute Abwelkbarkeit und Falzbarkeit.

Ebenfalls gute Ergebnisse wurden auch mit den Pulvern aus den Beispielen A2 bis A33 erhalten. Die Einsatzmengen werden in diesen Beispielen beibehalten.

### B 3: Herstellung von Wet White für ein vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50 % Wasser und 1 % eines Beizenzyms (Novobate® 1547, Produkt von Novozyme) zugegeben und für 1 Stunde bewegt. Anschließend wird die Flotte abgelassen und die Blösse erneut gewaschen.

In 50 % frischer Flotte wird die Blösse 1 Stunde mit 0,25% Magnesiumoxid auf pH 9,5 konditioniert und mit 2,8 % des erfindungsgemäßen Produktes aus Beispiel A3 versetzt (als Pulver oder mit Wasser 1:1 verdünnt) versetzt (pH 8,7). Nach 1 h Penetrationszeit werden 2,0 % eines 4,4'-Dihydroxy-diphenylsulfon / Naphthalinsulfonsäure / Formaldehyd-Kondensats (z.B. TANIGAN® BN, Produkt von LANXESS) und 1% des Formaldehyd-Kondensats aromatischer Sulfonsäuren (z.B. TANIGAN® PR, Produkt von Lanxess) zugegeben. Nach weiteren 2 Stunden (pH 7,8) werden 0,2 % Magnesiumoxid und 0,1 % einer wässrigen Ammoniaklösung (mit Wasser 1:5 verdünnt) zugegeben (pH nach 1 Stunde 9,0) und die Schrumpftemperatur gemessen. Das Fass wird bei 35 °C über Nacht bewegt (pH 8,9).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder werden gewaschen und abgewelkt. Die Schrumpftemperatur wird erneut gemessen (76°C) und die Leder auf 1,0 mm gefalzt.

Ebenfalls gute Ergebnisse wurden auch mit den Pulvern aus den Beispielen A1, A2 und A4 bis A33 erhalten.

Ebenfalls gute Ergebnisse wurden auch mit den Pulvern aus den Beispielen A2 bis A33 erhalten. Die Einsatzmengen werden in diesen Beispielen beibehalten.

### B 4: Herstellung von Wet white für ein Polsterleder:

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,5 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 90 Minuten bei 25°C bewegt (pH 8,5). Dann werden 50 % Wasser und 1 % eines Beizenzyms (Novobate® 1547, Produkt von Novozyme) zugegeben und für 45 Minuten bewegt. Anschließend wird die Flotte abgelassen und die Blösse erneut gewaschen.

Die vorbereitete Blösse wird in 50 % Flotte mit 1% Natriumacetat und 1 % Natriumcarbonat auf pH 9,9 konditioniert und dann mit 2,8 % des erfindungsgemäßen Produktes aus Beispiel A3 (als Pulver oder mit Wasser 1:1 verdünnt) versetzt (pH 8,6). Nach 30 Minuten Penetrationszeit werden 4 % eines 4,4'-Dihydroxydiphenylsulfon /Naphthalinsulfonsäure / Formaldehyd-Kondensats (z.B. TANIGAN® BN, Produkt von LANXESS) und 2% eines Formaldehyd-Kondensats aromatischer Sulfonsäuren (z.B. TANIGAN® PR, Produkt von LANXESS) (Zugabe als 50%ige Lösungen, pH 7) zugegeben. Nach 1 Stunde (pH 8,2) wird durch Zugabe von portionsweise Zugabe von insgesamt 1 % Natriumcarbonat (mit Wasser 1:10 verdünnt) innerhalb von 2 Stunden der pH der Flotte auf 8,7 angehoben und die Schrumpftemperatur gemessen. Das Leder wird anschließend bei 30 °C über Nacht bewegt (pH 8,1).

Zur Vorbereitung der Nachgerbung wird mit 0,6 % Ameisensäure (mit Wasser verdünnt 1:10) in 3 Portionen der pH auf 7,2 reduziert, die Flotte abgelassen und die Wet-White-Leder abgewelkt. Die Schrumpftemperatur wird gemessen (70 °C) und die Leder auf 1,0 mm Stärke gefalzt.

Ebenfalls gute Ergebnisse wurden auch mit den Pulvern aus den Beispielen A1, A2 und A4 bis A33 erhalten.

Ebenfalls gute Ergebnisse wurden auch mit den Pulvern aus den Beispielen A2 bis A33 erhalten. Die Einsatzmengen werden in diesen Beispielen beibehalten.

### B 5: Herstellung von Wet White für Schuhoberleder

Gesalzene Rindshäute werden handelsüblich gewaschen, geäschert, enthaart, entfleischt, und gespalten. Das Blössenmaterial (2,6 mm) wird mit 200% Flotte gewaschen und die Flotte abgelassen. Zur Entkälkung werden die Blössen im Fass in 100 % Flotte und 0,3 % Natriumbisulfit, 1,0 % eines N-freien Entkälkungsmittels (z.B. Decaltal® ES-N, Produkt von BASF) sowie 0,3 % einer Mischung von Dicarbonsäuren (z.B. Bascal® S, Produkt von BASF) für 1 Stunde bei 25°C bewegt. Bei pH 7,7 werden 1 % eines Beizenzyms (Novobate 1547, Produkt von Novozyme) und 0,1 % eines Fettalkoholethoxylat-basierten Entfettungsmittels zugegeben, für weitere 45 Minuten bewegt und die Flotte anschließend abgelassen und die Blösse zweimal gewaschen.

Die vorbereitete Blösse wird 1 Stunde mit 1 % Natriumacetat auf pH 8,0 konditioniert und mit 0,7 % des erfindungsgemäßen Produktes aus Beispiel A3 (als Pulver oder mit Wasser 1:1 verdünnt) versetzt. Nach 20 Minuten Penetrationszeit werden 0,2 % Natriumcarbonat (mit Wasser 1:10 verdünnt) zugegeben und 30 Minuten bewegt. Dann werden weitere 1,4 % des erfindungsgemäßen Produktes aus Beispiel A3 (als Pulver oder mit Wasser 1:1 verdünnt) zugegeben. Nach 1,5 Stunden wird durch portionsweise Zugabe von insgesamt 0,4 % Natriumcarbonat (mit Wasser 1:10 verdünnt) innerhalb von 2 Stunden der pH auf 8,2 angehoben und die Schrumpftemperatur gemessen. Dann wird 0,1% NH3-Lösung (mit Wasser 1:5 verdünnt) zugegeben und das Fass bei 35 °C über Nacht bewegt. Dann wird mit Ameisensäure (mit Wasser 1:10 verdünnt) der pH auf 7,0 reduziert. Man gibt dann 3,0 % eines 4,4'-Dihydroxydiphenylsulfon-basierten Gerbstoffs (z.B. TANIGAN® HO, Produkt von Lanxess) hinzu und bewegt das Fass für 2 Stunden. Dann wird die Flotte abgelassen. Die Wet-White-Leder werden gewaschen und abgewelkt. Die Schrumpftemperatur wird erneut gemessen (72°C). Die Leder lassen sich ohne Probleme verarbeiten und werden auf eine Stärke von 1,2 mm gefalzt.

Ebenfalls gute Ergebnisse wurden auch mit den Pulvern aus den Beispielen A1, A2 und A4 bis A33 erhalten.

Ebenfalls gute Ergebnisse wurden auch mit den Pulvern aus den Beispielen A2 bis A33 erhalten. Die Einsatzmengen werden in diesen Beispielen beibehalten.

### B 6: Chromfrei gegerbte Autopolsterleder :

Die gefalzten Wet-White-Leder aus Beispiel B 4 werden mit 300 % Wasser (35°C) und 0,2 % eines Fettalkohol-Ethoxylates bei pH 7,6 20 Minuten bewegt. Nach Ablassen der Flotte werden 50 % Wasser, 3 % eines Naphthalinsulfonsäure / Formaldehyd-Kondensats (TANIGAN® RFS, Produkt von LANXESS), 1,5 % Natriumformiat und zur Vorfettung 3 % eines Lecithin-basierten Fettungsmittels (BAYKANOL® Licker SL, Produkt von Lanxess) (verdünnt mit Wasser 1:8) zugegeben. Nach einer Laufzeit von 30 Minuten werden 2% einer Polyacrylat-Dispersion (LEUKOTAN® 1084, Produkt von Dow/Lanxess) (verdünnt mit Wasser 1:3) und nach weiteren 10 Minuten 3% einer modifizierten Polyamidcarbonsäure (LEVOTAN® L, Produkt von Lanxess) (verdünnt mit Wasser 1:3) als füllende und weichmachende Nachgerbstoffe zugegeben. Nach weiteren 10 Minuten Laufzeit werden 8 % Tara und 5 % eines synthetischen Gerbstoffs basierend auf einem 4,4'-Dihydroxydiphenylsulfon / Naphthalinsulfonsäure / Formaldehyd-Kondensat (TANIGAN® BN, Produkt von LANXESS) und nach 30 Minuten (pH 5,5) noch 8 % Mimosa und weitere 5% eines synthetischen Gerbstoffs basierend auf einem 4,4'-Dihydroxydiphenylsulfon /Naphthalinsulfonsäure / Formaldehyd-Kondensat (TANIGAN® BN, Produkt von LANXESS) zugegeben. Dann wird 2 Stunden mit 3 % Farbstoff gefärbt (pH 5,5 - 5,8). Nach Aufflotten mit 50 % Wasser werden weitere 4 % eines Lecithin-basierten Fettungsmittels (BAYKANOL® Licker SL, Produkt von Lanxess) (verdünnt mit Wasser 1:8) zugegeben und bei 50°C 1 Stunde gewalkt. Dann wird durch Zugabe von 2 % Ameisensäure (verdünnt mit Wasser 1:5) in 2 Portionen 45 Minuten fixiert (pH 4) und die Flotte abgelassen. Es wird mit 200 % Wasser (50°C) gewaschen.

In frischer Flotte (100 % Wasser, 50°C) wird mit 4 % eines Lecithin-basierten Fettungsmittels (BAYKANOL® Licker SL, Produkt von Lanxess) (verdünnt mit Wasser 1:8) bei einer Laufzeit von 1 Stunde die Top-Fettung durchgeführt. Dann wird mit 1 % Ameisensäure (verdünnt mit Wasser 1:5) in 2 Schritten auf pH 3,4 angesäuert und 45 Minuten fixiert. Dann wird die Flotte abgelassen, zweimal mit 200 % Wasser gewaschen und das Leder handelsüblich durch Ausrecken, Vakuumtrocknung (50°C), Hängetrocknung, Stollen, Millen, Stollen fertig gestellt.

Man erhält sehr weiche und trotzdem festnarbige, egal gefärbte Crustleder mit einem sehr gleichmäßigen Millkorn, die sich ausgezeichnet zurichten lassen.

### B 7: Chromfrei gegerbte Schuhoberleder:

Die gefalzten Wet-White-Leder aus Beispiel B 5 werden bei 35 °C in 150 % Flotte mit 0,3% Ameisensäure (mit Wasser verdünnt 1:10) für 20 Min. gewaschen (pH 4,3) und die Flotte abgelassen.

In frischer Flotte (100 % Wasser 30°C) wird zur Vorfettung mit einer Mischung aus 2 % eines synthetischen Fettungsmittels und 1 % eines Lecithin-basierten Fettungsmittels (verdünnt mit Wasser 1:8) und 5% eines 4,4'-Dihydroxydiphenylsulfon-basierten Gerbstoffs (TANIGAN® 3LN, Produkt von Lanxess) behandelt. Nach 20 Minuten werden 10 % eines Dihydroxydiphenylsulfon /Naphthalinsulfonsäure / Formaldehyd -Kondensats (TANIGAN® CF liquid, Produkt von LANXESS) (verdünnt mit Wasser 1:1) in 2 Portionen zugegeben und 45 Minuten eingewalkt (pH 4,5). Dann werden 70 % Wasser und 2 % eines Dispergiermittels auf Basis aromatischer Sulfonsäuren (TANIGAN® PAK, Produkt von Lanxess) zugegeben. Nach einer Laufzeit von 15 Minuten werden zunächst 4% einer modifizierten Polyamidcarbonsäure (LEVOTAN LB, Produkt von Lanxess) (verdünnt mit Wasser 1:3) und 3% einer Polyacrylat-Dispersion (LEUKOTAN® 8090, Produkt von Dow/Lanxess) zugegeben. Nach weiteren 20 Minuten wird eine Mischung aus 3% eines synthetischen und 2% eines Lecithin-basierten Fettungsmittels (BAYKANOL® Licker FSU und SL, Produkte von Lanxess) (verdünnt mit Wasser 1:5) zugegeben und nach weiteren 15 Minuten eine Mischung aus 5% Mimosa und 12 % von synthetischen Gerbstoffen basierend auf 4,4'-Dihydroxydiphenylsulfon / Formaldehyd-Kondensaten (TANIGAN® VR, TANIGAN® 3LN, Produkte von LANXESS) zugegeben. Nach einer Laufzeit von 30 Minuten wird mit 12% einer Mischung aus Kastanie gesüsst und synthetischen Gerbstoffen basierend auf einem Dihydroxydiphenylsulfon / Naphthalinsulfonsäure / Formaldehyd-Kondensat (TANIGAN VR, Produkt von LANXESS) und einem Harzgerbstoff (RETINGAN® ZF Plus, Produkt von Lanxess) in Gegenwart von 1 % Farbstoff und 2% eines Färbereihilfsmittels (BAYKANOL® TF-2N, Produkt von Lanxess) ausgegerbt und gefärbt.

Am nächsten Morgen wird nach Zugabe von 100% Wasser (50 °C) mit einer Mischung aus 3 % eines Lecithin-basierten Fettungsmittels, 3% eines Lanolin-basierten Fettungsmittels (BAYKANOL® Licker LA, Produkt von Lanxess), 2 % eines synthetischen Fettungsmittels (BAYKANOL® Licker SL, FSU, Produkte von Lanxess,) sowie 1% Klauenöl (z.B. Atlas Neatsfoot® Oil 30 CT) (verdünnt mit Wasser 1:5) eine Top-Fettung durchgeführt. Nach einer Laufzeit von 60 Minuten wird mit 3 % Ameisensäure (verdünnt mit Wasser 1:10) in 3 Portionen innerhalb von 80 Minuten fixiert (pH 3,6) und die Flotte abgelassen. Die Leder werden gewaschen und handelsüblich fertig gestellt.

Man erhält sehr weiche und trotzdem festnarbige, egal gefärbte Crustleder mit einem sehr gleichmäßigen Millkorn, die sich ausgezeichnet zurichten lassen.

## Patentansprüche

1. Festes, partikuläres Material enthaltend
a) wenigstens eine Carbamoylsulfonatgruppen-haltige Verbindung und
b) wenigstens einen Emulgator.

2. Festes, partikuläres Material nach Anspruch 1 **dadurch gekennzeichnet, dass** als Emulgator der Komponente b) wenigstens ein nichtionisches, Estergruppen-haltiges, alkoxyliertes Polyol mit einem HLB-Wert von wenigstens 13 (b1) und/oder ein Alkylglycosid (b2) und /oder ein nichtionischer Estergruppen-freier alkoxylierter Alkohol (b3) enthalten ist.

3. Festes, partikuläres Material nach wenigstens einem der Ansprüche 1 bis 3, **dadurch gekennzeichnet, dass** als Carbamoylsulfonatgruppen-haltige Verbindungen der Komponente a) Umsetzungsprodukte aus organischen Polyisocyanaten und Bisulfit und/oder Disulfit eingesetzt werden.

4. Festes, partikuläres Material nach Anspruch 3, **dadurch gekennzeichnet, dass** das organische Polyisocyanat ein Polyisocyanat mit einer NCO-Funktionalität von 1,8 bis 4,2 ist und vorzugsweise ein Molgewicht von < 800 g/mol besitzt, insbesondere ein Polyisocyanat mit einer NCO-Funktionalität von 1,8 bis 2,5 und einem Molgewicht < 400 g/mol ist.

5. Festes, partikuläres Material nach wenigstens einem der Ansprüche 3 bis 4, **dadurch gekennzeichnet, dass** das organische Polyisocyanat ein Molekulargewicht von weniger als 400 g/mol und an Aliphaten oder Cycloaliphaten gebundene NCO-Gruppen aufweist, insbesondere 1,4-Diisocyanatobutan, 1,6-Diisocyanatohexan (HDI), 1,5-Diisocyanato-2,2-dimethylpentan, 2,2,4- bzw. 2,4,4-Trimethyl- 1 ,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4-Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3-und 1,4- Bis(isocyanato-n-propyl)-cyclohexan sowie beliebige Gemische dieser Isomeren, 1-Isocyanatopropyl-4-isocyanatomethyl-cyclohexan und Isomere,1-Isocyanato-3,3,5-trimethyl-5-isocyanatomethyl-cyclohexan (IPDI), 1 -Isocyanato-1-methyl-4-isocyanatomethylcyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo [5.2.1.0^{2,6}]decan (TCDDI) und Isomere und beliebige Gemische solcher Diisocyanate und Xylylendiisocyanate der Formeln

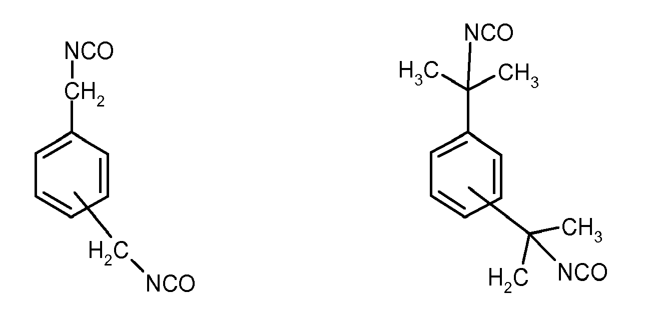

6. Festes, partikuläres Material nach wenigstens einem der Ansprüche 3 bis 5, **dadurch gekennzeichnet, dass** es sich bei der Verbindung der Komponente b1) um das Reaktionsprodukt eines Polyols mit wenigstens einem Alkylenoxid mit 2 bis 6 Kohlenstoffatomen, vorzugsweise in einer Menge von 10 bis 60 Mol-Äquivalenten, bezogen auf das Polyol und anschließender Umsetzung mit wenigstens einer Carbonsäure mit 6 bis 30 C-Atomen handelt.

7. Festes, partikuläres Material nach Anspruch 6, **dadurch gekennzeichnet, dass** es sich bei dem Polyol um ein Polyol aus der Gruppe bestehend aus Glycerin, Trimethylolpropan, Pentaerythrit, Dipentaerythrit, und von Mono- und Polysacchariden abgeleitete Polyole, insbesondere Sorbit und Polyole mit Sorbitan-Grundgerüst handelt.

8. Festes, partikuläres Material nach wenigstens einem der Ansprüche 1 bis 7, **dadurch gekennzeichnet, dass** es bei der Verbindung der Komponente b2) um Alkyhnonoglucoside, Alkyldiglucoside, Alkyltriglucoside, oder höhere Homologe und deren Gemische handelt, deren Hydroxylgruppen partiell mit C₆-C₁₈-Alkylgruppen substituiert sind.

9. Festes, partikuläres Material nach wenigstens einem der Ansprüche 1 bis 7, **dadurch gekennzeichnet, dass** es bei der Verbindung der Komponente b3) um Alkoxylate aliphatischer Alkohole mit einer Kettenlänge von 5 bis 30 Kohlenstoffatomen und 1-25 Alkoxy-Einheiten handelt.

10. Festes, partikuläres Material nach wenigstens einem der vorangegangenen Ansprüche, **dadurch gekennzeichnet, dass** als weitere Zusatzstoffe Carbonsäuren der Komponente c) oder deren Salze, enthalten oder auch nicht enthalten sind und/oder als weitere Zusatzstoffe der Komponente d) organische Gerbstoffe, wie Syntane, Harzgerbstoffe, polymere Nachgerbstoffe sowie vegetabile Gerbstoffe und/oder Hilfsstoffe wie Fettungsmittel, Entstaubungsmittel, Puffer und/oder Füllstoffe enthalten oder nicht enthalten sind.

11. Festes, partikuläres Material nach wenigstens einem der vorangegangenen Ansprüche, **dadurch gekennzeichnet, dass** sie Komponente c) weinigsten eine Carbonsäure, vorzugsweise Oxalsäure, Bernsteinsäure, Glutarsäure, oder Adipinsäure, insbesondere weinigsten eine Hydroxy-Polycarbonsäure, vorzugsweise Citronensäure, Weinsäure oder Milchsäure oder Gemische daraus enthält.

12. Festes, partikuläres Material nach wenigstens einen der vorangegangenen Ansprüche, **dadurch gekennzeichnet, dass** das Material eine mittlere Teilchengröße von von 0,1 µm bis 1000 µm, vorzugsweise 1 bis 800 µm, insbesondere 50 bis 300 µm aufweist.

13. Festes, partikuläres Material nach wenigstens einem der vorangegangenen Ansprüche **dadurch gekennzeichnet, dass** das Material einen Schmelzpunkt von größer 20°C, vorzugsweise von größer 60°C, insbesondere größer 100°C besitzt.

14. Festes, partikuläres Material nach wenigstens einem der vorangegangenen Ansprüche, enthaltend
5 bis 99, 999 Gew.-% der Komponente a),
0,001 bis 5 Gew.-% der Komponente b),
0 bis 15 Gew.-% Komponente c),
0 bis 70 Gew.-% weitere von a) bis c) verschiedenen Zusatzstoffen (Komponente d) und
0 bis 5 Gew.-% Wasser (Restfeuchte).

15. Verfahren zur Herstellung des festen, partikulären Materials nach wenigstens einem der Ansprüche 1 bis 15, das **dadurch gekennzeichnet, dass** man wenigstens ein organisches Polyisocyanat mit wenigstens einem Bisulfit und/oder Disulfit in Gegenwart von Wasser und der Komponente b) und ggf. einer Carbonsäure der Komponente c) umsetzt, ggf. mit weiteren Zusatzstoffen versetzt, und entweder das partikuläre Material mit einem organischen Lösungsmittel ausfällt und nachfolgend trocknet oder die Reaktionsmischung trocknet.

16. Verfahren zur Herstellung des festen, partikulären Materials nach wenigstens einem der Ansprüche 1 bis 15, **dadurch gekennzeichnet, dass** man die Komponenten a), b) und gegebenenfalls weitere Zusatzstoffe mischt.

17. Verwendung des festen, partikulären Materials nach wenigstens einem der Ansprüche 1 bis 15 als Vorgerbstoffe oder Gerbstoffe zum Gerben oder Vorgerben von Häuten und Fellen.

18. Verfahren zum Gerben von Häuten oder Fellen, **dadurch gekennzeichnet, dass** man durch Waschen, Äschern, gegebenenfalls Enthaarung und Entkälken vorbehandelte Häute oder Felle mit dem festen, partikulären Material nach wenigstens einem der Ansprüche 1 bis 15 behandelt.

19. Nach dem Verfahren gemäß Anspruch 19 erhaltenes Wet-White-Leder,

20. Leder und Pelze hergestellt unter Verwendung eines festen, partikulären Materials gemäß Anspruch 1.

21. Verfahren zur Herstellung von Leder und/oder Pelzen **dadurch gekennzeichnet, dass** in wässriger Flotte bei einer Temperatur von 10 bis 60 °C und einem pH von 5 bis 10, bevorzugt 7 bis 9 vorbereitete Blössenmaterial mit 0,5 bis 10 %, bevorzugt 1 bis 4 %, bezogen auf den Anteil der Komponente a) des festen, partikulären Materials nach wenigstens einem der Ansprüche 1 bis 15 solange behandelt, bis man ein gegerbtes Zwischenprodukt mit einer Schrumpftemperatur von mindestens 65°C, bevorzugt mindestens 68°C, besonders bevorzugt mindestens 70°C erhält.
